Europäisches Patentamt

European Patent Office

Office européen des brevets

(19)

(11) EP 0 503 095 B1

(12) EUROPEAN PATENT SPECIFICATION

(45) Date of publication and mention
of the grant of the patent:
**12.06.1996 Bulletin 1996/24**

(21) Application number: **91917069.6**

(22) Date of filing: **03.10.1991**

(51) Int Cl.6: **G11B 11/10**, G11B 7/085

(86) International application number:
**PCT/JP91/01335**

(87) International publication number:
**WO 92/06472 (16.04.1992 Gazette 1992/09)**

(54) **MAGNETO-OPTICAL DISK DRIVE SEEK CONTROL SYSTEM**

SUCHSTEUERSYSTEM FÜR MAGNETO-OPTISCHES SCHEIBENANTRIEBSGERÄT

SYSTEME DE COMMANDE DE RECHERCHE POUR LECTEUR DE DISQUE MAGNETO-OPTIQUE

(84) Designated Contracting States:
DE FR

(30) Priority: **03.10.1990 JP 265720/90**
**03.10.1990 JP 265721/90**

(43) Date of publication of application:
**16.09.1992 Bulletin 1992/38**

(73) Proprietors:
• **FUJITSU LIMITED**
**Kawasaki-shi, Kanagawa 211 (JP)**
• **Nippon Telegraph and Telephone Corporation**
**Tokyo 100 (JP)**

(72) Inventors:
• **YANAGI, Shigenori, Fujitsu Limited**
**Kawasaki-shi Kanagawa 211 (JP)**

• **KUDO, Kazuki, 1-38, Nukui**
**Tokyo 176 (JP)**
• **KATOH, Kikuji, Central-Haitsu 503**
**Tokorozawa-shi Saitama 359 (JP)**

(74) Representative:
**Fane, Christopher Robin King et al**
**HASELTINE LAKE & CO.**
**Hazlitt House**
**28 Southampton Buildings**
**Chancery Lane**
**London, WC2A 1AT (GB)**

(56) References cited:
EP-A- 0 332 408          EP-A- 0 387 019
EP-A- 0 392 777          JP-A- 1 317 228
JP-A-63 148 428

## Description

TECHNICAL FIELD

This invention relates to a seek control system of a magneto-optic disk unit having an optical head, a VCM positioner with a voice coil motor (VCM) for driving the optical head, and two lens actuators disposed on the optical head, for positioning two beams on the same track on a medium to simultaneously erase and write the track.

BACKGROUND ART

A magneto-optic disk unit must clear a target track before writing data to the target track. Namely, it must carry out an erase operation before a write operation on the target track. Since it takes a long time if the erase and write operations are separately made, a recent magneto-optic disk unit emits an erase beam and a write beam in vicinities on a target track, to carry out the write operation immediately after the erase operation.

To realize such a simultaneous operation, the disk unit has an optical head moved across tracks by a VCM positioner, two lens actuators (track actuators) disposed on the optical head, and object lenses arranged on the lens actuators to pass the erase and write beams respectively. According to tracking error signals provided by these beams, the disk unit carries out track servo control to trace the target track.

The disk unit also carries out a seek operation by driving the lens actuators. This seek operation is controlled by a processor and carried out with, for example, the write beam at first and then with the erase beam. This raises a problem of increasing an access time in proportion to the number of the beams. This access time must be minimized.

When seeking a target track with the erase beam, the disk unit drives the VCM positioner while counting the number of tracks crossed by the erase beam according to the tracking error signal of the erase beam. After the completion of the seek operation with the erase beam, the unit starts the track servo control. At this time, the unit sets the write beam on the target track without counting the number of tracks crossed by the write beam. Accordingly, the write beam may deviate from the target track. The unit corrects this deviation through a corrective seek operation, which needs time. This means that, to shorten the access time, it is necessary to prevent a deviation of the write beam during the VCM positioner seek operation.

EP-A-0 332 408 discloses a control system of a magneto-optic disk unit having the features of the preambles of accompanying claims 1 and 4. No details are given concerning the seek control system in this document.

EP-A-0 392 777 is relevant only under Article 54(3) EPC. It discloses a seek control system including first and second track servo means as well as first and second lens seek control means, and a single processor for controlling the operation of the seek control system.

JP-A-63 148 428 discloses a track count means used in combination with two scanning beams, and operable to count the number of tracks crossed by one of the beams by using a tracking signal thereof.

EP-A-0 387 019 discloses a beam track position control apparatus for an optical disk unit, in which a single processor controls two independent track servo controls.

The invention provides a seek control system of a magneto-optic disk unit having an optical head driven by a VCM positioner, two lens actuators disposed on the optical head, and object lenses disposed on the lens actuators, respectively, for directing first and second beams (erase and write beams) onto the same track on a medium to record and reproduce data thereto and therefrom.

An object of the invention is to shorten an access time needed for accessing a target track through a lens seek operation carried out by driving the two lens actuators. Another object of the invention is to prevent a deviation (off-track) of the second beam from the target track during the VCM positioner seek operation carried out according to the first beam, and shorten the access time.

According to a first aspect of the invention, there is provided a control system of a magneto-optic disk unit having an optical head moved by a positioner across tracks of a medium, first and second lens actuators mounted on the optical head, and object lenses disposed on the lens actuators, respectively, for directing first and second beams onto the same track on the medium, said control system comprising:

first track servo means for driving the first lens actuator according to a tracking error signal of the first beam, to carry out tracking control of the first beam; and
second track servo means for driving the second lens actuator according to a tracking error signal of the second beam, to carry out tracking control of the second beam; characterised in that said control system is a seek control system and further comprises:
first lens seek control means for driving the first lens actuator to seek a target track with the first beam;
a first processor for turning OFF the track servo control by the first track servo means and ON the first lens seek control means upon receiving a seek instruction from a higher device, to start a seek operation with the lens;
second lens seek control means for driving the second lens actuator to seek the target track with the second beam; and
a second processor for turning OFF the track servo control of the second track servo means and turning ON the second lens seek means upon receiving the seek instruction of the higher device through the first processor, to start a seek operation with the lens; wherein:

the second processor notifies the first processor of the completion of the seek operation with the second beam; and

the first processor notifies the higher device of the completion of the seek operation upon receiving the seek completion notice from the second processor after the seek operation with the first beam is completed.

According to this aspect of the invention, exclusive-use processors are provided for carrying out lens seek control of the first and second beams. Upon receiving a seek instruction from a higher device, the processors carry out the lens seek operations of the two beams in parallel.

According to a second aspect of the invention, there is provided a control system of a magneto-optic disk unit having an optical head moved by a positioner across tracks of a medium, first and second lens actuators mounted on the optical head, and object lenses disposed on the lens actuators, respectively, for directing first and second beams onto the same track on the medium, said control system comprising:

first beam position control means comprising first track servo means for driving the first lens actuator according to a tracking error signal of the first beam, to carry out tracking control of the first beam; and second beam position control means comprising second track servo means for driving the second lens actuator according to a tracking error signal of the second beam, to carry out tracking control of the second beam; characterised in that: said control system is a seek control system; said first beam position control means further comprises:

first lens seek control means for driving the first lens actuator to seek a target track with the first beam;

first track count means for counting the number of tracks crossed by the first beam according to the tracking signal of the beam;

positioner seek control means for driving the positioner according to the first beam, to move the first and second beams to a target track; and

first beam control means for turning OFF the track servo control by the first track servo means and turning ON the positioner seek control means upon receiving a seek instruction from a higher device, to move the first and second beams toward a target track, and when a beam speed decreases below a specified value in front of the target track, turning ON the first lens seek control means to carry out a lens seek operation; and

said second beam position control means further comprises:

second lens seek control means for driving the second lens actuator to seek the target track with the second beam;

second track count means for counting the number of tracks crossed by the second beam according to the tracking signal of the beam; and

second beam control means for turning OFF the track servo control by the second track servo means, and when the moving speed of the second beam by the positioner decreases below the specified value, turning ON the second lens seek means to carry out a lens seek operation; wherein

the second beam control means notifies the first beam control means of the completion of the seek operation with the second beam, and the first beam control means notifies the higher device of the completion of the seek operation upon receiving the seek completion notice from the second beam control means after the seek operation with the first beam is completed.

According to this aspect of the invention, the number of tracks crossed by the first beam as well as that crossed by the second beam are counted. When the moving speed of the second beam decreases to a lens seek possible speed at a target track due to the positioner seek operation carried out with the first beam, the lens seek operation with the second beam is carried out.

BRIEF DESCRIPTION OF THE DRAWINGS

Fig. 1 is a view explaining a principle of an aspect of the invention;
Fig. 2 is a schematic view showing an optical head according to the invention;
Fig. 3 is a schematic view showing a head optical system according to the invention;
Fig. 4 is an exploded view showing a lens actuator according to the invention;
Fig. 5 is a schematic view showing an embodiment of the invention of Fig. 1;
Fig. 6 is an explanatory view showing a lens seek operation according to the invention of Fig. 1;
Fig. 7 is an explanatory view showing a positioner seek operation according to the invention of Fig. 1;
Fig. 8 is a schematic view showing an optical head according to a prior art;

Fig. 9 is a schematic view showing lens seek control according to the prior art;

Fig. 10 is an explanatory view showing a lens seek operation according to the prior art;

Fig. 11 is a view explaining a principle of another aspect of the invention;

Fig. 12 is a schematic view showing an embodiment of the invention of Fig. 11;

Fig. 13A is a flowchart showing a basic operation of Fig. 12;

Fig. 13B is a flowchart showing a main operation of a first processor of Fig. 12;

Fig. 13C is a flowchart showing a seek operation of the first processor of Fig. 12;

Fig. 13D is a flowchart showing a seek command operation of a second processor of Fig. 12;

Fig. 13E is a timing chart showing control signals between the first and second processors of Fig. 12;

Fig. 14 is an explanatory view showing a positioner seek operation of the invention of Fig. 11;

Fig. 15 is a schematic view showing positioner seek control according to a prior art; and

Fig. 16 is an explanatory view showing a positioner seek operation according to the prior art.

## BEST MODE OF CARRYING OUT THE INVENTION

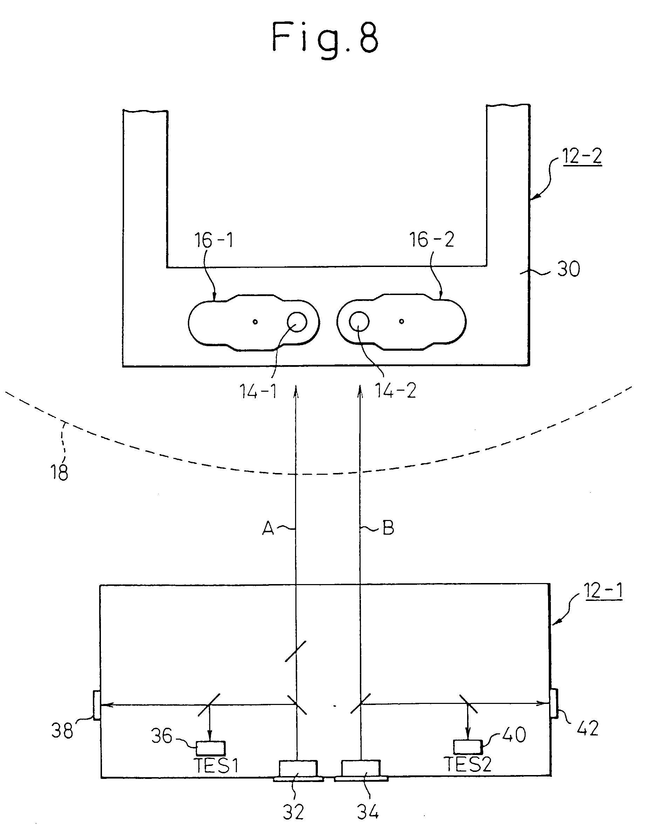

Before explaining the present invention, a prior art will be explained with reference to Figs. 8 through 10.

Figure 8 is a plan view showing a two-actuator optical head according to the prior art.

In Fig. 8, numeral 18 is a magneto-optic disk serving as a medium. For the magneto-optic disk 18, a fixed optical system 12-1 and a movable optical system 12-2 are arranged on a carriage 30 that is moved across tracks by a VCM positioner.

The fixed optical system 12-1 has a writing semiconductor laser 32 and an erasing semiconductor laser 34. A first beam A is a write beam, and a second beam B an erase beam.

The movable optical system 12-2 has two two-dimensionally rocking lens actuators 16-1 and 16-2 for moving object lenses 14-1 and 14-2 across tracks according to rotations of arms, and axially moving the object lenses 14-1 and 14-2 for focusing.

The semiconductor laser 32 of the fixed optical system 12-1 emits the write beam A, which passes through a writing optical system and the object lens 14-1 of the lens actuator 16-1 disposed on the movable optical system 12-2, and irradiates the magneto-optic disk 18. A return beam from the magneto-optical disk 18 passes through the writing optical system and received by a tracking error detector 36 employing a two-piece photosensor. The tracking error detector 36 detects a tracking error signal TES1 from the write beam A according to a push-pull method (a far field method). Namely, the two-piece photosensor has two photosensors that are symmetrically arranged on each side of a track center, for receiving a return beam reflected and diffracted by a guide groove on the magneto-optic disk 18, and providing a difference of the outputs of the photosensors as the tracking error signal TES1. Numeral 38 is a photosensor for detecting a focus error.

The semiconductor laser 34 emits the erase beam B, which passes through the object lens 14-2 of the lens actuator 16-2, and irradiates, in the vicinity of the write beam A, the same track of the magneto-optic disk 18 as that irradiated by the write beam A. A return beam of the erase beam B passes through the same route and enters a tracking error detector 40 employing a two-piece photosensor to provide a tracking error signal TES2 according to the erase beam B. Numeral 42 is a photosensor for detecting a focus error.

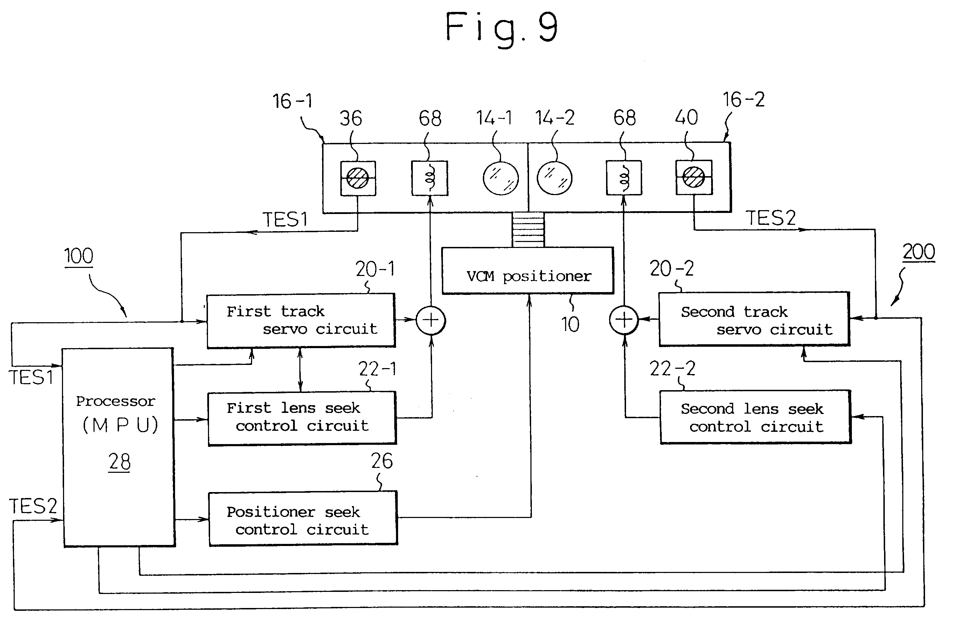

Figure 9 is a schematic view showing the conventional seek control system.

In Fig. 9, a write beam position control portion 100 comprises a first track servo circuit 20-1 for driving the lens actuator 16-1 according to the tracking error signal TES1 of the write beam, to carry out tracking control of the write beam; a first lens seek control circuit 22-1 for driving the lens actuator 16-1 to seek a target track with the write beam; and a positioner seek control circuit 26 for driving the VCM positioner 10 according to the write beam, to move the write and erase beams to a target track.

An erase beam position control portion 200 comprises a second track servo circuit 20-2 for driving the lens actuator 16-2 according to the tracking error signal TES2 of the erase beam, to carry out tracking control of the erase beam; and a second lens seek control circuit 22-2 for driving the lens actuator 16-2, to seek the target track with the erase beam.

A processor (MPU) 28 totally controls the position control portions 100 and 200.

Upon receiving a seek instruction from a higher controller, the processor 28 seeks a target track with the write beam. This seek operation with the write beam turns OFF the servo control by the first track servo circuit 20-1 on the present track, turns ON the first lens seek control circuit 22-1, and drives the lens actuator 16-1 to move the write beam to the target track. After the write beam reaches the target track, the first track servo circuit 20-1 is again turned ON to set the beam on the track.

After the lens seek operation with the write beam is completed, the processor 28 starts a lens seek operation with the erase beam. Namely, the processor turns OFF the track servo control by the second track servo circuit 20-2, and drives the lens actuator 16-2 to seek the track with the erase beam. When the erase beam reaches the target track, the processor again turns ON the second track servo circuit 20-2 to set the erase beam on the target track.

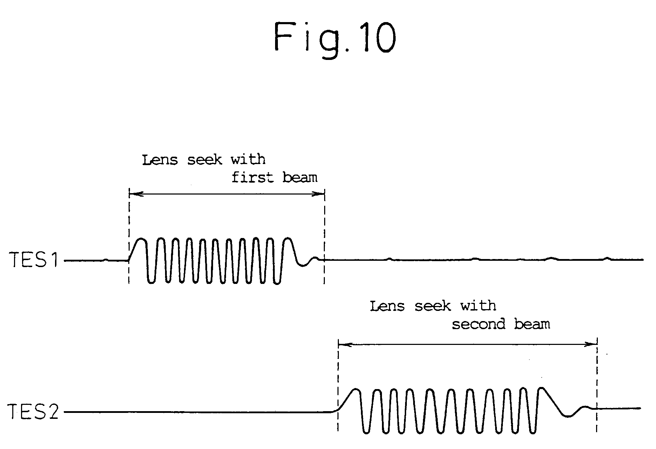

According to the lens seek control of the conventional two-actuator system, the processor sequentially seeks the target track with the first beam, i.e., the write beam, and then with the second beam, i.e., the erase beam, as indicated with the tracking error signals TES1 and TES2 of the write and read beams shown in Fig. 10. Accordingly, the system needs a longer access time than a single beam magneto-optic disk unit.

To solve the problem of the conventional system, an object of one aspect of the invention is to shorten the access time of a lens seek operation carried out by driving two lens actuators.

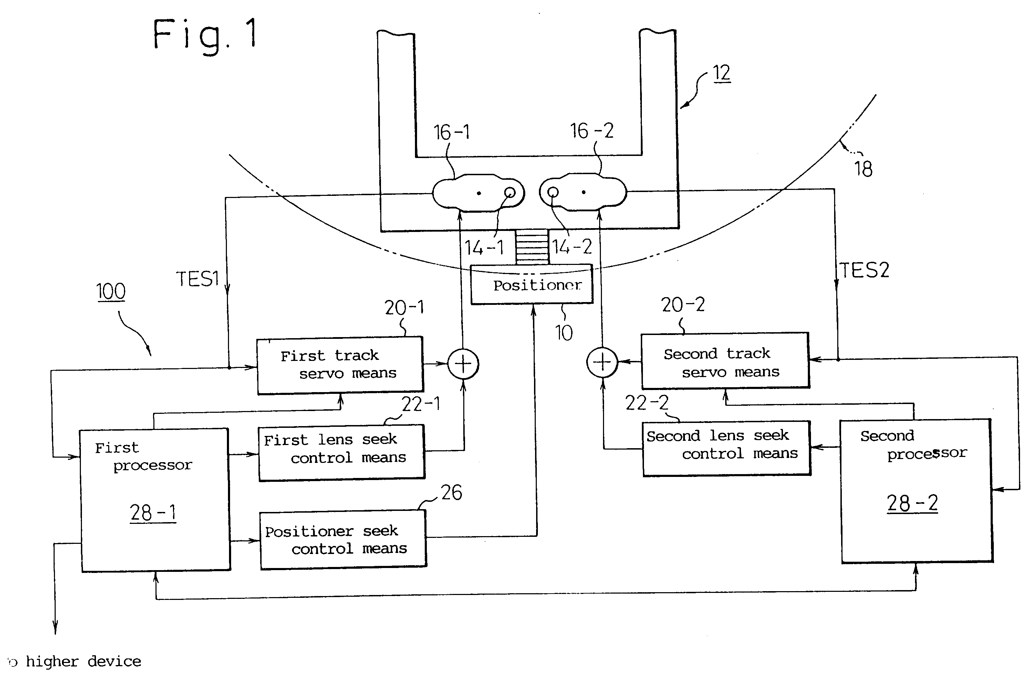

Figure 1 explains a principle of the one aspect of the invention.

This invention is applicable for a magneto-optic disk unit having a positioner 10, an optical head 12 driven by the positioner 10 across tracks of a medium, and first and second lens actuators 16-1 and 16-2 having object lenses 14-1 and 14-2, respectively. First and second beams are emitted through the object lenses 14-1 and 14-2 onto the same track on the medium 18.

A seek control system according to the invention for this sort of magneto-optic disk unit comprises:

first track servo means 20-1 for driving the first lens actuator 16-1 according to a tracking error signal TES1 of the first beam, to carry out tracking control of the first beam;

first lens seek control means 22-1 for driving the first lens actuator 16-1 to seek a target track with the first beam;

a first processor 28-1 for turning OFF the track servo control by the first track servo means 20-1 and ON the first lens seek control means 22-1 upon receiving a seek instruction from a higher device, to start a lens seek operation;

second track servo means 20-2 for driving the second lens actuator 16-2 according to a tracking error signal TES2 of the second beam, to carry out tracking control of the second beam;

second lens seek control means 22-2 for driving the second lens actuator 16-2 to seek the target track with the second beam; and

a second processor 28-2 for turning OFF the track servo control by the second track servo means 20-2 and ON the second lens seek means 22-2 upon receiving the seek instruction of the higher device through the first processor 28-1, to start a lens seek operation.

The second processor 28-2 notifies the first processor 28-1 of the completion of the seek operation with the second beam, and the first processor 28-1 notifies the higher device of the completion of the seek operation upon receiving the seek completion notice from the second processor 28-1 after the completion of the seek operation with the first beam.

The first processor 28-1 controls positioner seek control means 26 for driving the positioner 10 according to the first beam, to move the first and second beams to the target track, and the second processor 28-2 does not control the positioner seek control means (26).

The seek control system of the magneto-optic disk unit according to the one aspect of the invention employs the processors exclusively used for positioning the first and second beams, respectively. Upon receiving an access instruction from the higher device, the two processors simultaneously seek a target track with the first and second beams in parallel, to shorten an access time to a level substantially equal to an access time of a single beam optical disk unit.

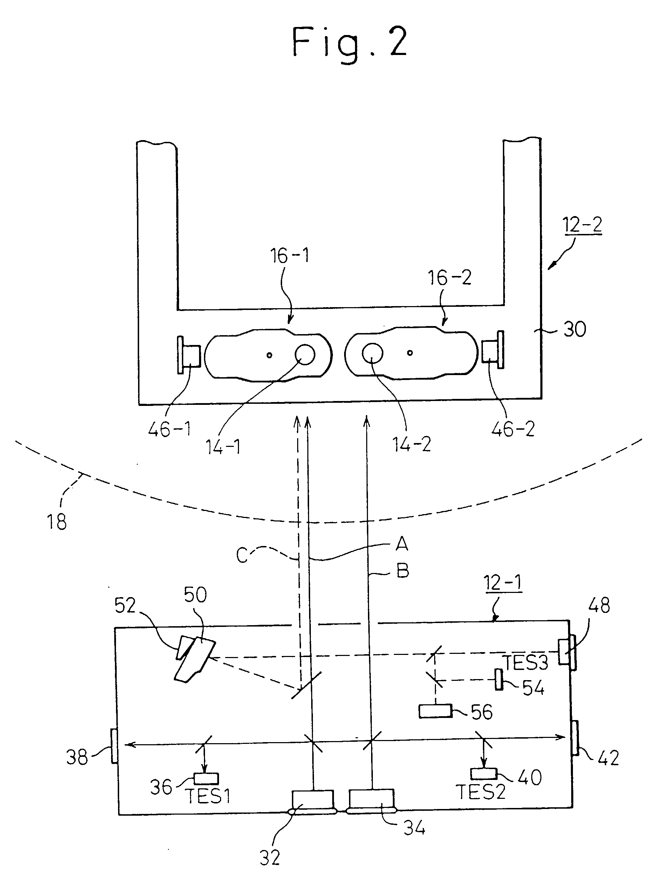

Figure 2 is a plan view showing an optical head of a magneto-optic disk unit according to the invention.

In Fig. 2, the optical head comprises a fixed optical system 12-1 fixed to a unit frame, and a movable optical system 12-2 mounted on a carriage 30 of a VCM positioner to be explained later and moved across tracks on a magneto-optic disk 18.

The movable optical system 12-2 has a first lens actuator 16-1 and a second lens actuator 16-2 disposed on the carriage 30. For example, these are two-dimensionally rocking lens actuators. The lens actuator 16-1 has an object lens 14-1 for passing a first beam, i.e., a write beam A, and the lens actuator 16-2 has an object lens 14-2 for passing a second beam, i.e., an erase beam B. According to rotations of the actuators driven by tracking coils, the object lenses 14-1 and 14-2 are moved across the tracks, to achieve tracking control and lens seek operation. Behind the lens actuators 16-1 and 16-2, there are arranged lens position detectors 46-1 and 46-2 for optically detecting the positions of the lenses.

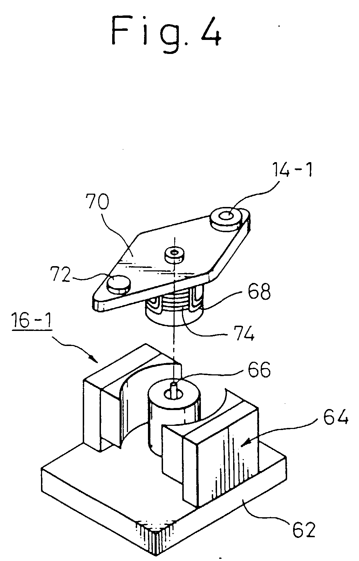

Figure 4 is an exploded view showing the lens actuator 16-1, which is identical to the lens actuator 16-2.

In Fig. 4, the lens actuator 16-1 comprises a base 62, a magnetic circuit 64 fixed on the base, and an upright slide shaft 66 disposed at the center of the magnetic circuit 64. With respect to this fixed portion on the base 62, a movable portion is a rotary arm 70. The rotary arm 70 has a lower cylindrical portion around which a tracking coil 68 and a focus coil 74 are arranged. One end of the rotary arm 70 has the object lens 14-1, and the other end a balance weight 72. A center hole of the rotary arm 70 engages with the slide shaft 66 of the base 62. The rotary arm 70 is turned around the shaft to carry out the tracking control and lens seek operation, and slid along the shaft to carry out focusing control.

The lens actuators 16-1 and 16-2 of the invention are not limited to the two-dimensionally rocking type of Fig. 4 but may be of any type having a proper structure.

Referring again to Fig. 2, the fixed optical system 12-1 includes a semiconductor laser 32 for emitting a write beam A having a wavelength of 836 to 845 nm, and a semiconductor laser 34 for emitting an erase beam B having a wavelength of 836 to 845 nm. The write beam A from the semiconductor laser 32 passes through a writing optical system to be explained later, reaches the movable optical system 12-2, passes through the object lens 14-1 of the lens actuator 16-1, and forms a beam spot on a track on the magneto-optic disk 18. A return beam of the write beam A oppositely passes the same route and returns to the fixed optical system 12-1. The return beam is split by the fixed optical system 12-1 and made incident to a tracking error detector 36 for detecting a tracking error signal TES1 of the write beam A and to a photosensor 38 for detecting a focus error.

On the other hand, the erase beam B from the semiconductor laser 34 passes through an erasing optical system to be explained later, reaches the movable optical system 12-2, passes through the object lens 14-2 of the lens actuator 16-2, and forms a beam spot on the same track irradiated with the write beam A in the vicinity of the write beam A. A return beam of the erase beam B oppositely passes through the same route. The return beam is split by the fixed optical system 12-1 and made incident to a tracking error detector 40 for detecting a tracking error signal TES2 of the erase beam B and to a photosensor 42 for detecting a focus error.

According to the embodiment of Fig. 2, the object lens 14-1 passes a read beam C in addition to the write beam A. This enables a verify read operation to be carried out just after a write operation. The read beam C is a laser beam having a wavelength of 780 to 789 nm and emitted by a semiconductor laser 48. The read beam C is reflected by a galvanomirror 50 disposed in a reading optical system to be explained later, and passed through the object lens 14-1 of the lens actuator 16-1. The beam C then forms a beam spot on the same track irradiated with the write beam A or on a proper track a predetermined number of tracks away from the track of the write beam A. A return beam of the read beam passes through the same route in an opposite direction, is reflected by the galvanomirror 50, split and made incident to a tracking error detector 54 for detecting a tracking error signal TES3 of the read beam C and to a photosensor 56 for detecting a high-frequency signal. The galvanomirror 50 has a galvanomirror position detector 52 for optically detecting the position of the mirror.

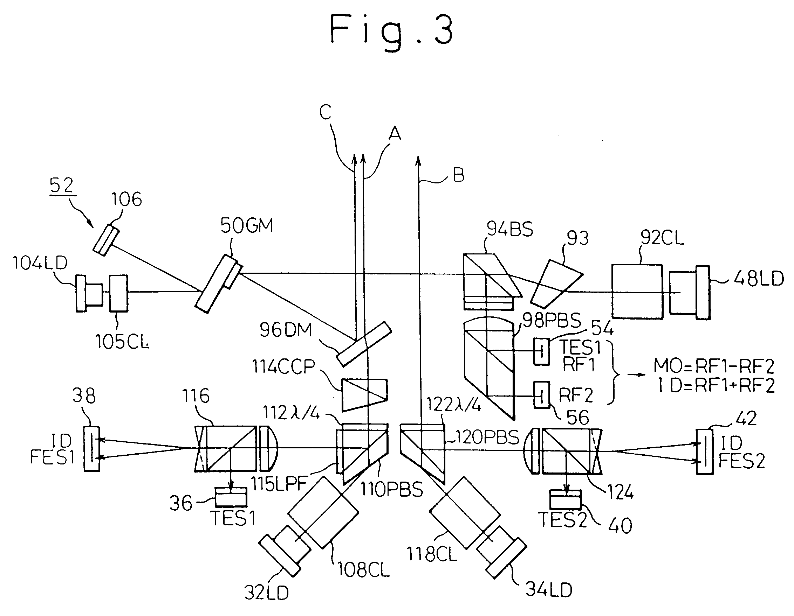

The details of the head optical system of Fig. 2 will be explained with reference to Fig. 3.

Firstly, the optical system for the first beam, i.e., the write beam A will be explained.

The semiconductor laser 32 emits a pulse beam according to a data bit of 1 or 0. The beam is converted into a coherent beam by a collimator lens 108, passed through a polarization beam splitter 110, a λ/4 plate 112, a color correction prism (CCP) 114, and a dichroic mirror 96, and provided to the object lens 14-1 of the movable optical system of Fig. 2. The beam is then passed through the object lens 14-1 and emitted to the magneto-optic disk 18. A return beam from the magneto-optic disk 18 is passed through the same route, made incident to the polarization beam splitter 110, reflected by the polarization beam splitter 110 in an orthogonal direction, passed through a low-pass filter 115, and made incident to a Foucault optical unit 116. The Foucault optical unit 116 is for providing a focus error signal FES1 according to Foucault's method. The beam from the Foucault optical unit 116 is made incident to the photosensor 38, which provides the focus error signal FES1 for the write beam A as well as an ID signal corresponding to a light intensity determined by irregularities of a track preformat. The return beam of the write beam A reflected by the Foucault optical unit 116 in an orthogonal direction is provided to the tracking error detector 36, which provides the tracking error signal TES1 of the write beam A according to the push-pull method (far field method). The reason why the low-pass filter 115 is disposed is because, when an immediate reading operation with the read beam is carried out just after a write operation, the magneto-optic disk 18 provides a return beam of the write beam A as well as a return beam of the read beam C. Accordingly, the low-pass filter 115 passes only the return beam of the write beam A having a longer wavelength and blocks the return beam of the read beam C having a shorter wavelength.

Next, the optical system for the second beam, i.e., the erase beam B will be explained.

The semiconductor laser 34 provides a beam, which is converted into a coherent beam by a collimator lens 118. The coherent beam is passed through a polarization beam splitter 120 and a λ/4 plate 122, and provided to the object lens 14-2 of the movable optical system of Fig. 2, to irradiate the magneto-optic disk 18. A return beam from the magneto-optic disk 18 is reflected by the polarization beam splitter 120 in an orthogonal direction, passed through a Foucault optical unit 124, and made incident to the photosensor 42. The photosensor 42 provides a focus error signal FES2 for the erase beam B as well as an ID signal corresponding to a light intensity of a track preformat portion. The return beam separated by the Foucault optical unit 124 is made incident to the tracking error detector 40, which provides, according to the outputs of a two-piece photosensor, a tracking error signal TES2 of the erase beam B according to the push-pull method (far field method).

The head optical system for the read beam C for carrying out a read operation just after a write operation will be explained.

A semiconductor laser 48 provides a beam, which is converted into a coherent beam by a collimator lens 92. A prism 93 changes the direction of the coherent beam, which is passed through a beam splitter 94, and made incident to the galvanomirror 50. The beam is reflected by the galvanomirror 50 and by the dichroic mirror 96, passed through the object lens 14-1 of the movable optical system of Fig. 2, and emitted to the magneto-optic disk 18. A return beam from the magneto-optic disk 18 is reflected by the dichroic mirror 96 and galvanomirror 50, and made incident to the beam splitter 94, which reflects the beam in an orthogonal direction. The beam is then made incident to a polarization beam splitter 98, which splits the beam into two parts for a tracking error detector 54 and for a photosensor 56. The tracking error detector 54 provides a tracking error signal TES3 and a signal RF1 based on the read beam C according to the push-pull method (far field method). The photosensor 56 provides a signal RF2. A subtraction operation of the signals RF1 and RF2 provided by the tracking error detector 54 and photosensor 56 provides a reproduced magneto-optic signal MO, and an addition operation thereof provides an ID signal indicting an intensity due to irregularities of a preformat portion. Namely, the magneto-optic signal MO and preformat ID signal are obtained as follows:

$$MO = RF1 - RF2$$

$$ID = RF1 + RF2$$

The galvanomirror 50 of the optical system for the read beam C involves the galvanomirror position detector 52 for detecting the position of the mirror. The detector 52 comprises a semiconductor laser 104, a collimator lens 105, and a two-piece photosensor 106.

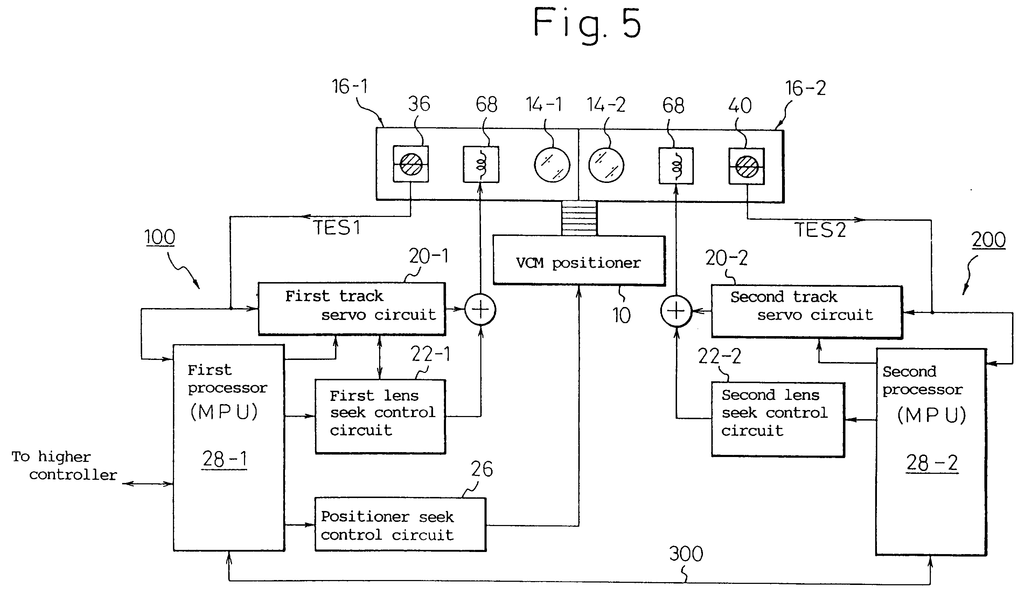

Figure 5 is a schematic view showing a seek control system according to an embodiment of the invention.

In Fig. 5, the lens actuator 16-1 for the write beam and the lens actuator 16-2 for the erase beam are driven and moved by the same VCM positioner 10. The lens actuators 16-1 and 16-2 include the tracking error detectors 36 and 40, tracking coils 68, and object lenses 14-1 and 14-2, respectively.

Firstly, a position control portion 100 for controlling the write beam through the lens actuator 16-1 will be explained.

The write beam position control portion 100 comprises a first track servo circuit 20-1 for driving the first lens actuator 16-1 according to the tracking error signal TES1 of the write beam, to carry out tracking control of the write beam; a first lens seek control circuit 22-1 for driving the first lens actuator 16-1 to seek a target track with the write beam; a positioner seek control circuit 26 for driving the VCM positioner 10 according to the write beam, to move the write and erase beams to a target track; and a first processor 28-1 (MPU) for totally controlling the write beam side.

On the other hand, a position control portion 200 for the erase beam comprises a second track servo circuit 20-2 for driving the second lens actuator 16-2 according to the tracking error signal TES2 of the erase beam, to carry out tracking control of the erase beam; a second lens seek control circuit 22-2 for driving the second lens actuator 16-2 to seek the target track with the erase beam; and a second processor (MPU) 28-2 for totally controlling the erase beam side. Between the first processor 18-1 and the second processor 28-2, there is arranged a communication bus 300 for communicating control process information between the processors.

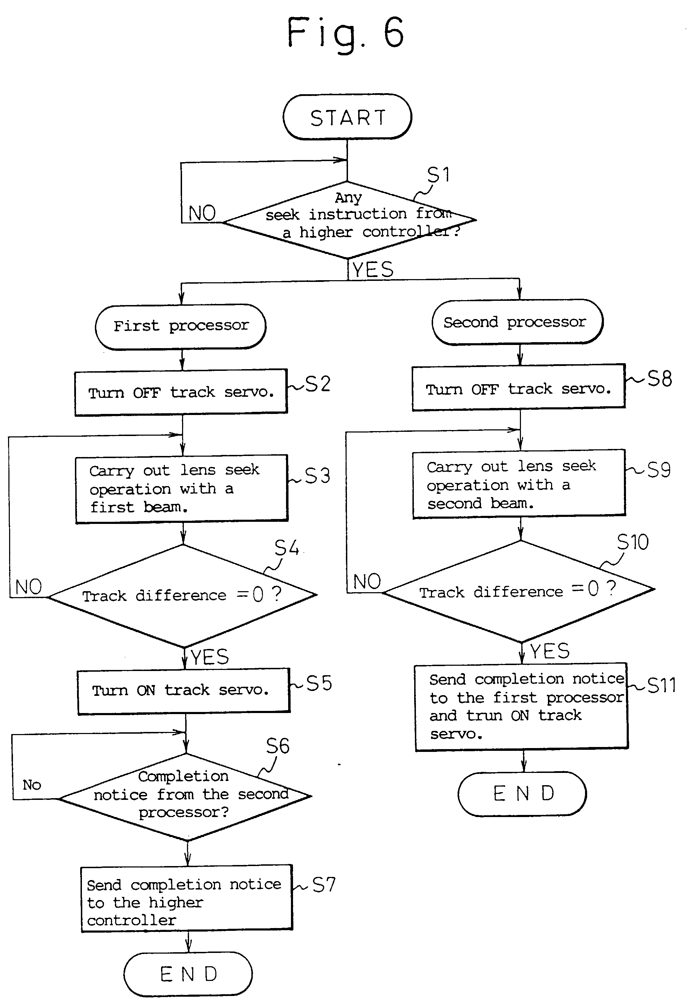

A lens seek operation according to the embodiment of Fig. 5 will be explained with reference to a flowchart of Fig. 6.

In Fig. 6, Step S1 (hereinafter, the word "Step" is omitted) monitors a seek instruction from a higher controller through the first processor 28-1. Upon receiving the seek instruction, S1 starts a lens seek operation of its own, and at the same time, notifies the second processor 28-2 of the contents of the seek instruction, thereby starting a lens seek operation of the second processor 28-2.

On the first processor 28-1 side, S2 turns OFF the first track servo circuit 20-1 to cancel the present tracking operation of the write beam. Then, S3 turns ON the first lens seek control circuit 22-1, which seeks a target track. Namely, the first lens seek control circuit 22-1 supplies a current to drive the tracking coil 68 of the lens actuator 16-1, to control the speed of the lens actuator. The first processor 28-1 receives a tracking error signal TES1 through this seek operation, and detects crossed tracks according to, for example, zero crossings. During the lens seek operation of S3, S4 monitors whether or not a track difference is zeroed, i.e., whether or not the beam has reached the target track. If the track difference is zeroed to reach the target track, S5 again turns ON the first track servo circuit 20-1 to set the write beam on the target track. This completes the lens seek operation. S6 waits for a seek completion notice from the second processor 28-2 that has simultaneously started the lens seek operation. Upon receiving the seek completion notice for the erase beam from the second processor 28-2, S7 notifies the higher controller of the completion of the seek operation.

On the second processor 28-2 side that has started the lens seek operation for the erase beam simultaneously with the first processor 28-1, S8 turns OFF the second track servo circuit 20-2 to cancel the present tracking operation of the erase beam. S9 seeks the target track with the erase beam. The number of tracks crossed by the erase beam during the lens seek operation is detected from the number of zero crossings of the tracking error signal TES2. S10 monitors whether or not a track difference for the erase beam is zeroed. If the track difference is zeroed to reach the target track, S11 notifies the first processor 28-1 of the completion of the seek operation with the erase beam, and at the same time, turns ON the second track servo circuit 28-2 to set the erase beam on the target track.

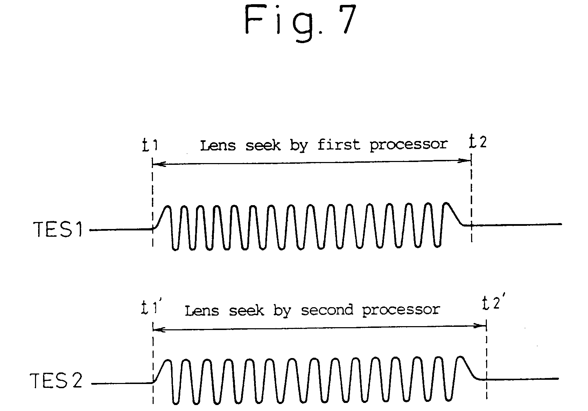

According to the lens seek operation of the invention shown in Fig. 6, the lens seek operation with the write beam by the first processor 28-1 and the lens seek operation with the erase beam by the second processor 28-2 are simultaneously started at time t1 as shown in Fig. 7, and completed at time t2 and t2', which are different from each other due to characteristics of the beam systems. Since the lens seek operations with the two beams are carried out in parallel with each other, the invention can substantially halve an access time compared with the conventional system that sequentially carries out the operations one after another.

In the embodiment of Fig. 5, a positioner seek operation by driving the VCM positioner 10 is controlled by the first processor 28-1. During the positioner seek operation, the track servo and lens seek operations on the second processor 28-2 side are both turned OFF, and only position locking control for suppressing abnormal motions of the actuator due to, for example, external vibration is carried out.

For the read beam C that is passed through the object lens 14-1 similar to the write beam A of the embodiment of Fig. 2, the galvanomirror 50 may be driven to control the position of the read beam relative to the position of the write beam.

As explained above, the one aspect of the invention arranges two lens actuators on a single optical head for controlling the positions of first and second beams, and provides the actuators with processors for exclusively and independently controlling the actuators. This arrangement can simultaneously carry out lens seek operations for the first and second beams in response to a seek instruction from a higher device, to thereby shorten a track access time to a level substantially equal to that of a single-beam magneto-optic disk unit. Accordingly, the one aspect of the invention achieves a track access operation at a high speed.

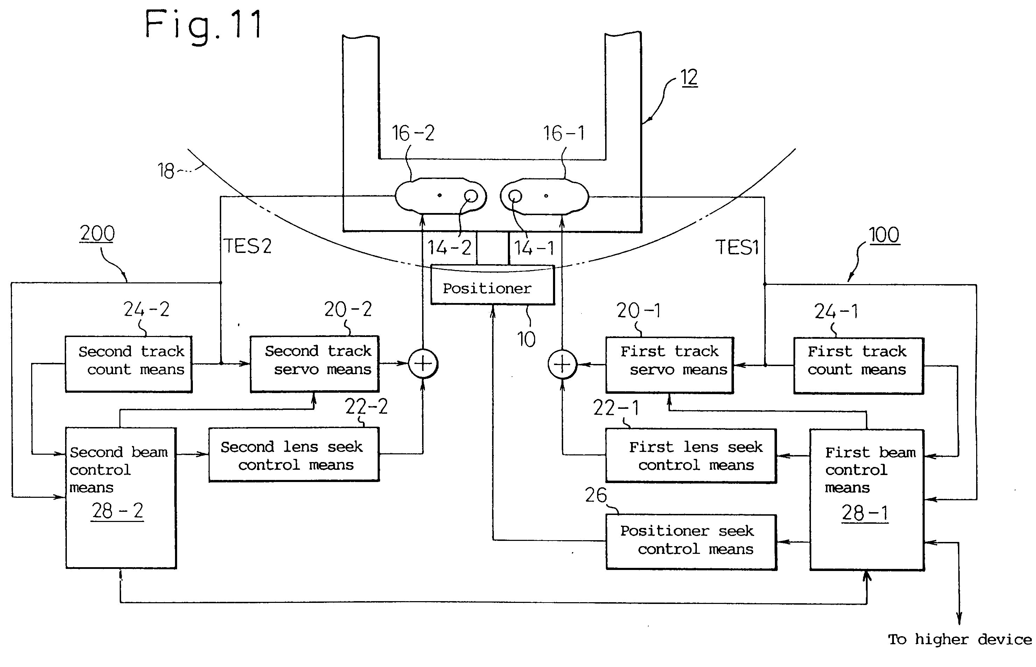

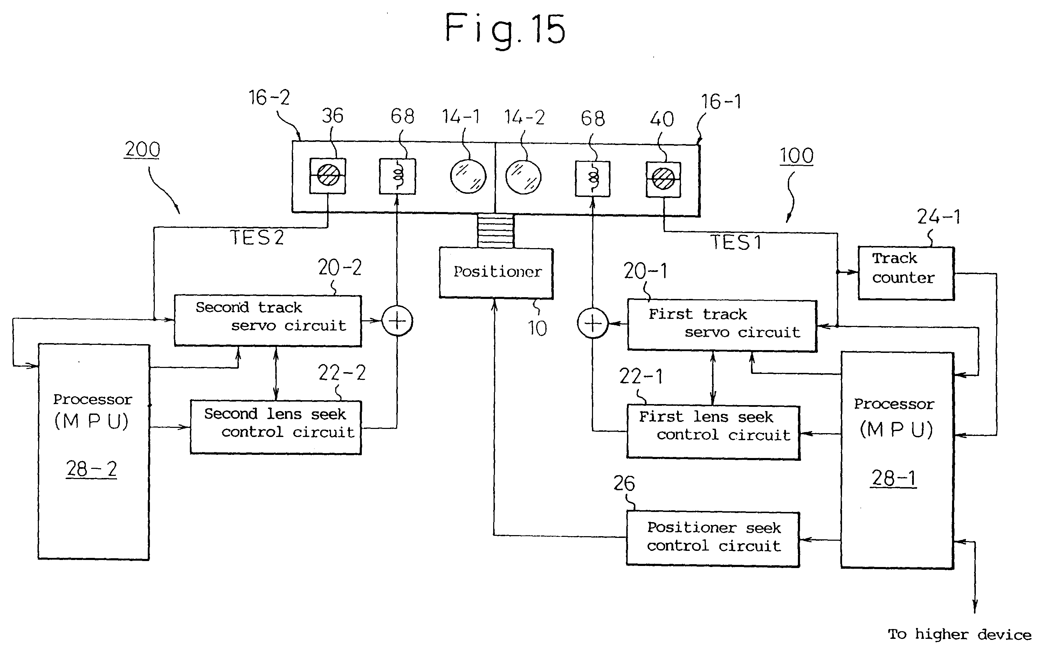

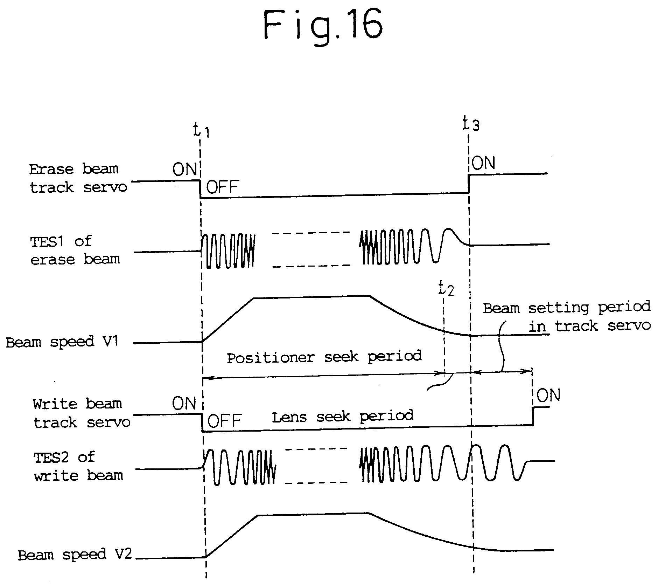

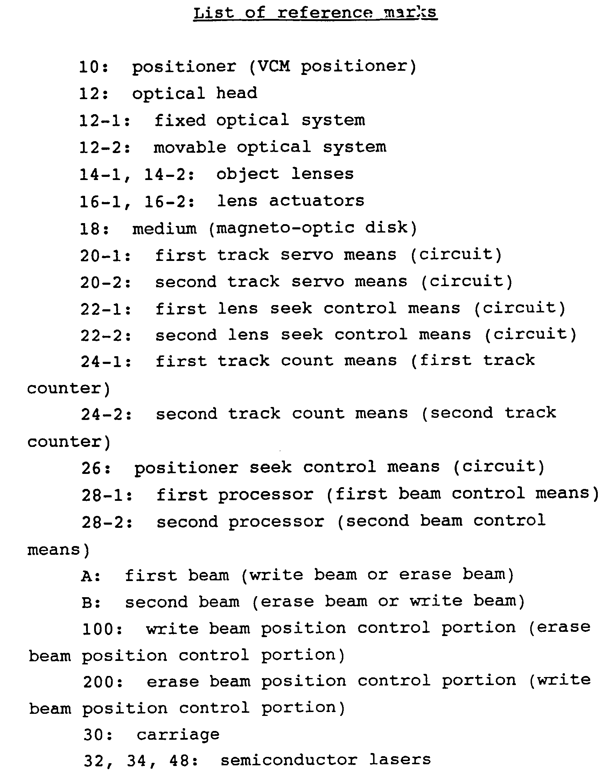

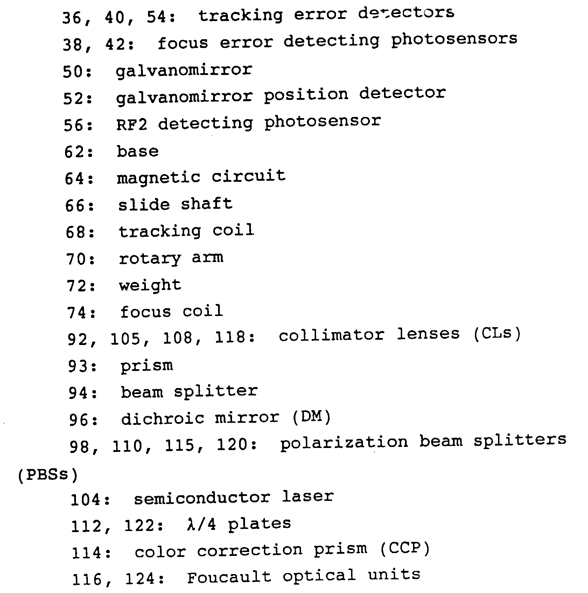

Figure 11 shows another aspect of the invention. Before explaining this aspect, the problems of a prior art will be explained with reference to Figs. 15 and 16.

Figure 15 is a schematic view showing a conventional seek control system.

In Fig. 15, an erase beam position control portion 100 comprises a first track servo circuit 20-1 for driving the lens actuator 16-1 according to a tracking error signal TES1 of an erase beam, to carry out tracking control of the erase beam, a first lens seek control circuit 22-1 for driving the lens actuator 16-1 to seek a target track with the erase beam, a first track counter 24-1 for counting the number of tracks crossed by the erase beam according to the tracking signal TES1 of the erase beam, a positioner seek control circuit 26 for driving a VCM positioner 10 according to the erase beam, to move the erase beam and a write beam to the target track, and a processor (MPU) 28-1 for totally controlling the position of the erase beam.

Upon receiving a seek instruction from a higher controller, the processor 28-1 turns OFF the present track servo operation by the first track servo circuit 20-1, and ON the positioner seek control circuit 26 to drive the VCM positioner 10 to move the erase and write beams toward a target track.

Namely, as shown in Fig. 16, the track servo control is turned OFF at time t1 according to the seek instruction, and the positioner seek operation is carried out to accelerate, maintain, and decelerate the speed of the erase beam (the first beam) as indicated with a beam speed V1, thereby moving the erase beam close to the target track. When the beam speed VI of the erase beam decreases to a lens seek possible level due to the positioner deceleration operation in front of the target track at time t2, the first lens seek control circuit 22-1 is turned ON to drive the lens actuator 16-1 to move the erase beam onto the target track by the lens seek operation. During this lens seek operation, it is monitored whether or not a track difference is zeroed according to the number of crossed tracks counted by the track counter 24-1 according to the tracking error signal TES1. When it is zeroed at time t3, it is determined that the seek operation has been completed. Then, the lens seek and positioner seek operations are terminated, and the track servo operation is resumed to set the erase beam on the target track.

On the other hand, a write beam position control portion 200 comprises a second track servo circuit 20-2 for driving the lens actuator 16-2, to carry out tracking control of the write beam, and a second lens seek control circuit 22-2 for driving the lens actuator 16-2, to seek the target track with the write beam. Upon receiving the seek instruction of the higher controller through the processor 28-1, the processor 28-2 turns OFF the track servo control of the write beam by the second track servo circuit 20-2 at time t1 of Fig. 10, and again turns ON the second track servo circuit 20-2 after receiving the seek completion notice of the VCM positioner 10 for the erase beam at time t3, to set the write beam on the target track.

According to the lens seek control of the conventional two-actuator system, a seek time will be elongated if a time for the servo control of the second beam, i.e., the write beam is taken into account. The erase beam for which the number of crossed tracks is counted may be correctly positioned on a target track. The write beam for which the number of crossed tracks is not counted and which is moved to the target track according to the seek operation of the erase beam frequently causes a deviation from the target track. If the deviation happens, a corrective seek operation must be carried out for the write beam. This causes a problem of extending an access time longer than that of a conventional one-actuator magneto-optic disk unit.

In consideration of this problem, an object of this aspect of the invention is to prevent a deviation (off-track) of the second beam due to the positioner seek operation for the first beam, to thereby shorten the access time.

Figure 11 explains a principle of this aspect of the invention. As explained with reference to Fig. 1, the invention is applied for a magneto-optic disk unit having a positioner 10, an optical head 12 driven by the positioner 10 across tracks of a medium 18, and first and second lens actuators 16-1 and 16-2 having object lenses 14-1 and 14-2, respectively. First and second beams are emitted through the object lenses 14-1 and 14-2 onto the same track on the medium 18.

A seek control system according to the invention for this kind of magneto-optic disk unit comprises first beam position control means 100 involving:

first track servo means 20-1 for driving the first lens actuator 16-1 according to a tracking error signal

TES1 of the first beam, to carry out tracking control of the first beam;

first lens seek control means 22-1 for driving the first lens actuator 16-1 to seek a target track with the first beam;

first track count means 24-1 for counting the number of tracks crossed by the first beam according to the tracking signal TES1 of the beam;

positioner seek control means 26 for driving the positioner 10 according to the first beam, to move the first and second beams to the target track; and

first beam control means 28-1 for turning OFF the track servo control by the first track servo means 20-1 and ON the positioner seek control means 26 upon receiving a seek instruction from a higher device, to move the first and second beams toward a target track, and when a beam speed decreases below a specified value in front of the target track, turning ON the first lens seek control means 22-1 to carry out a lens seek operation.

The system also comprises second beam position control means 200 involving:

second track servo means 20-2 for driving the second lens actuator 16-2 according to a tracking error signal TES2 of the second beam, to carry out tracking control of the second beam;

second lens seek control means 22-2 for driving the second lens actuator 16-2 to seek the target track with the second beam;

second track count means 24-2 for counting the number of tracks crossed by the second beam according to the tracking signal TES2 of the beam; and

second beam control means 28-2 for turning OFF the track servo control by the second track servo means 20-2, and when the moving speed of the second beam by the positioner 10 decreases below the specified value, turning ON the second lens seek means 22-2 to carry out a lens seek operation.

When the speed of the second beam decreases to the specified speed for enabling the lens seek operation after the completion of acceleration for the positioner seek operation, the second beam control means 28-2 turns ON the second lens seek control means 22-2 to seek the track with the second beam.

The second beam control means 28-2 notifies the first beam control means 28-1 of the completion of the seek operation with the second beam, and the first beam control means 28-1 notifies the higher device of the completion of the seek operation upon receiving the seek operation completion notice from the second beam control means 28-2 after the seek operation with the first beam is completed.

When a track difference based on the number of crossed tracks counted by the first track count means 24-1 is zeroed during the lens seek operation, the first beam control means 28-1 terminates the lens seek operation with the first beam as well as the positioner seek operation, and at the same time, turns ON the first track servo means 20-1 to start the tracking control. When a track difference based on the number of crossed tracks counted by the second track count means 24-2 is zeroed during the lens seek operation, the second beam control means 28-2 terminates the lens seek operation with the second beam, and at the same time, turns ON the second track servo means 20-2 to start the tracking control.

According to the invention, the first beam is an erase beam, and the second beam is a write beam.

According to the above seek control system of this aspect of the invention for the magneto-optic disk unit, the number of tracks crossed by the second beam (write beam) is also counted during a positioner seek operation for seeking a target track with the first beam (erase beam), and when the moving speed of the second beam decreases to a lens seek possible level, a lens seek operation with the second beam is carried out according to the number of crossed tracks counted. Accordingly, the target track is correctly sought with the second beam as well through only one seek operation, i.e., with no correction seek operation. This realizes the same access speed as that in a one-actuator magneto-optic disk unit.

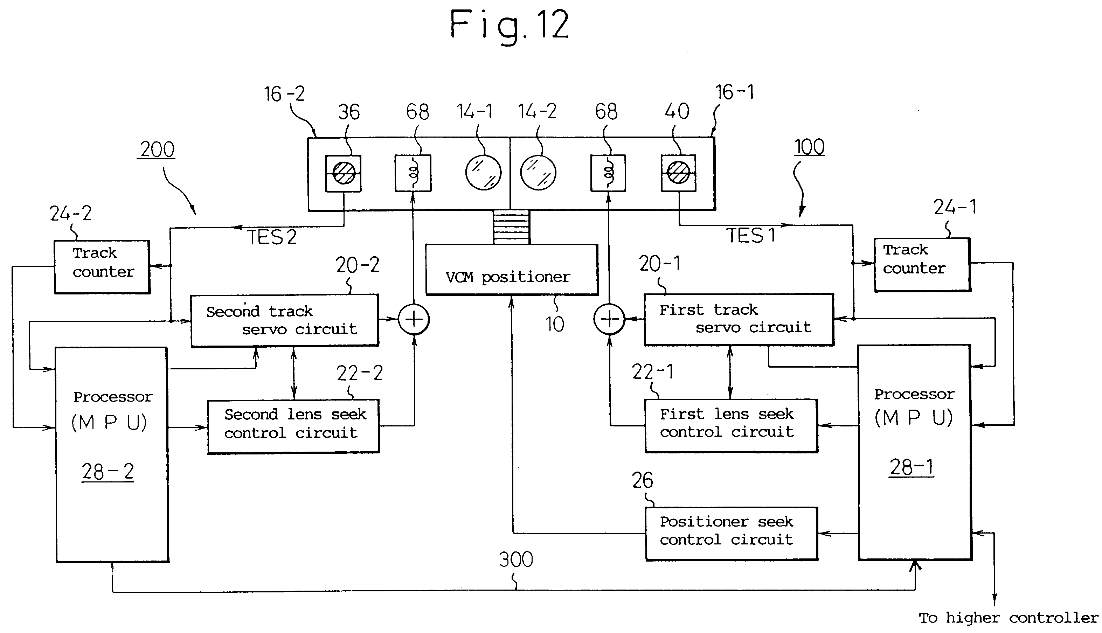

Figure 12 is a schematic view showing an embodiment of the invention of Fig. 11.

In Fig. 12, lens actuators 16-1 and 16-2 are disposed on a movable optical system and moved together across tracks by a VCM positioner 10. The track actuators 16-1 and 16-2 include tracking error detectors 36 and 40, object lenses 14-1 and 14-2, and tracking coils 68, respectively.

Firstly, a position control portion 100 for controlling the lens actuator 16-1 will be explained.

The erase beam position control portion 100 comprises a first track servo circuit 20-1 for carrying out tracking control of a write beam according to a tracking error signal TES1; a first lens seek control circuit 22-1 for driving the first track actuator 16-1 according to a track difference obtained from the tracking error signal TES1, to seek a target track with an erase beam; a track counter 24-1 for counting the number of tracks crossed by the erase beam according to the tracking error signal TES1; a positioner seek control circuit 26 for driving the VCM positioner 10 according to the track difference obtained from the tracking error signal TES1 of the erase beam, to carry out a positioner seek operation with the erase and write beams; and a processor (MPU) 28-1 for carrying out total seek control in response to a seek instruction from a higher controller.

The track counter 24-1 detects zero crossings of the tracking error signal TES1, and detects the number of tracks crossed by the erase beam according to the number of the zero crossings. The tracking error signal TES1 is directly given to the processor 28-1, which can compute the moving speed of the erase beam according to, for example, a period of the tracking error signal, and control the speed of the lens seek and positioner seek operations.

Next, a write beam position control portion 200 will be explained. The write beam position control portion 200 comprises a second track servo circuit 20-2 for carrying out the tracking control of the write beam according to a tracking error signal TES2 of the write beam; a second lens seek control circuit 22-2 for driving the lens actuator 16-2 to carry out a lens seek operation with the write beam; and a processor 28-2 serving as write beam control means for totally controlling the position of the write beam. In addition, the present invention newly arranges a track counter 24-2 for counting the number of crossed tracks according to the tracking error signal TES2 of the write beam.

Further, a communication bus 300 is arranged between the processor 28-1 and the processor 28-2. When receiving a seek instruction from the higher controller, the processor 28-1 notifies the processor 28-2 of this instruction. When completing a seek operation with the erase beam, the processor 28-1 notifies the processor 28-2 of the completion. After completing the seek operation with the erase beam and after receiving a seek completion notice for the write beam from the processor 28-2, the processor 28-1 notifies the higher controller of the seek completion.

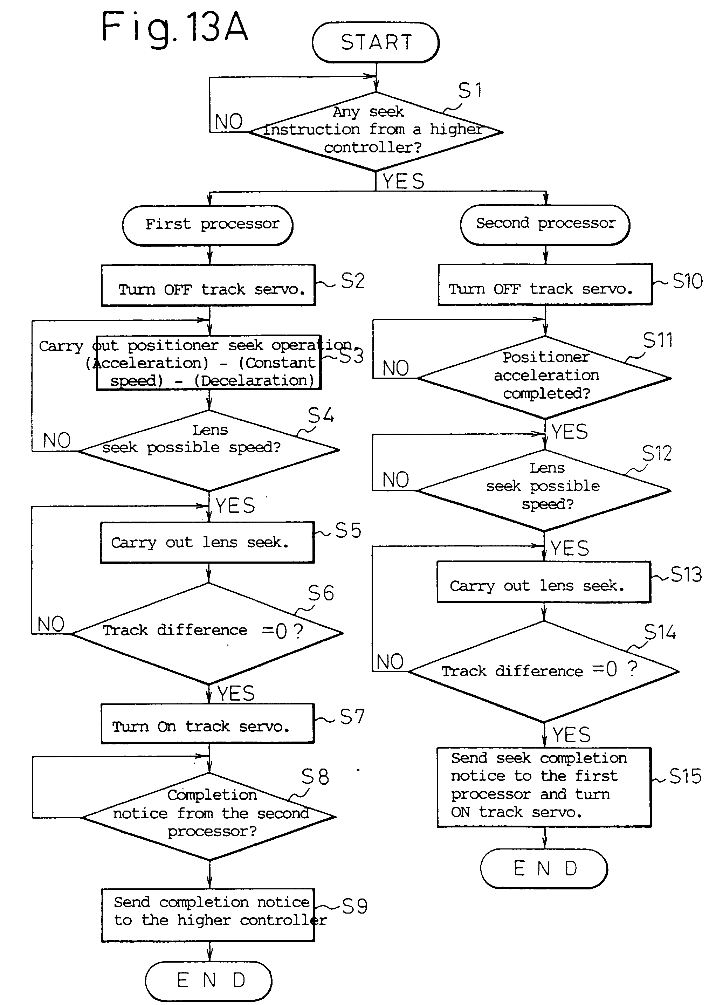

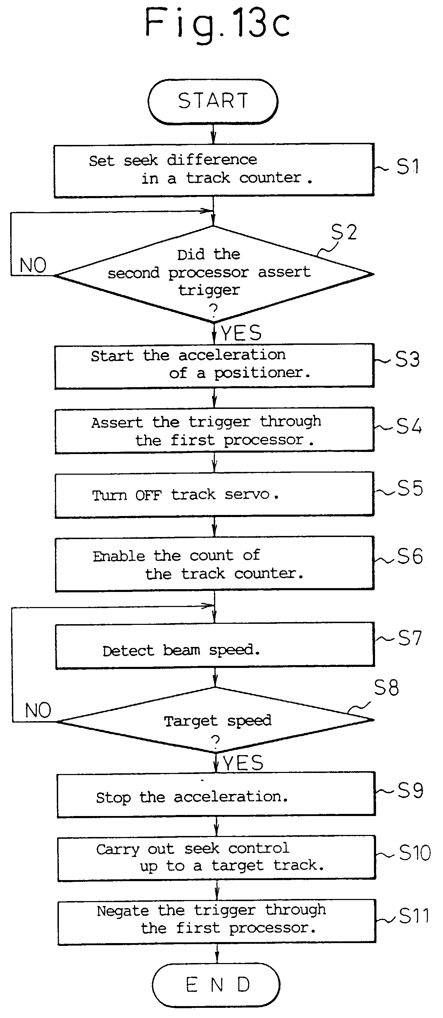

The erase beam seek control operation by the processor 28-1 and the write beam seek control operation by the processor 28-2 in the embodiment of Fig. 12 will be explained with reference to a basic operation flowchart of Fig. 13A.

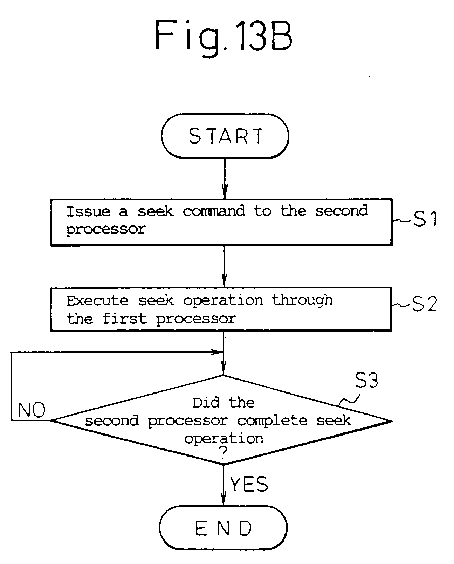

In Fig. 13A, Step S1 (hereinafter, the word "Step" is omitted) determines that the first processor 28-1 has received a seek instruction from the higher controller, and informs the processor 28-2 of the contents of the seek instruction, so that the processors 28-1 and 28-2 may start seek operations in parallel (Fig. 13B).

Firstly, the erase beam seek operation of the processor 28-1 (first processor) will be explained.

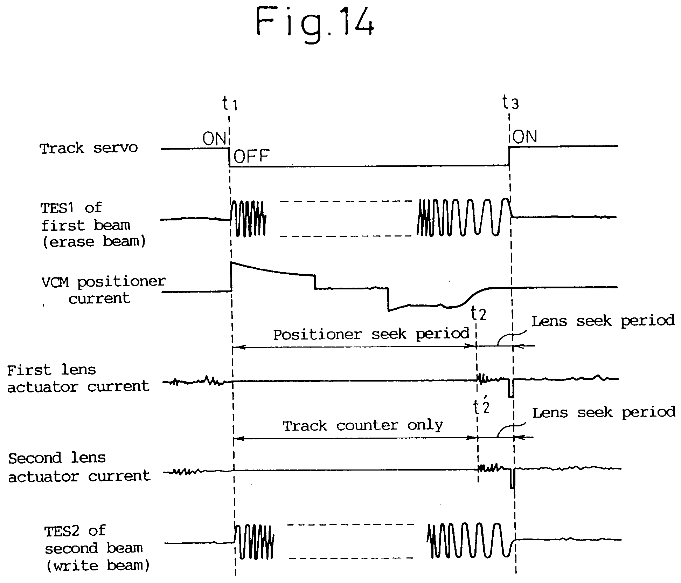

For starting the erase beam seek operation, S2 firstly turns OFF the first track servo circuit 20-1 to cancel the present track servo operation, and at the same time, activates the positioner seek control circuit 26 to carry out a positioner seek operation. More precisely, as indicated from time t1 to t2 on a VCM positioner current shown in Fig. 14, which is an explanatory view of the positioner seek operation, the positioner is accelerated in an initial seek stage by flowing an acceleration current thereto, kept at a constant speed after the completion of the acceleration, and decelerated by flowing a deceleration current thereto when a track difference relative to a target track becomes below a specified value.

During the positioner seek operation, S4 monitors whether or not the moving speed of the erase beam has been reduced to a lens seek possible value. When S4 determines that the beam speed has decreased to the lens seek possible value, S5 activates the first lens seek control circuit 22-1 to drive the track actuator 16-1 by energizing the tracking coil 68, to start a lens seek operation for moving the object lens 14-1 to the target track. This lens seek operation is started at time t2 of Fig. 14.

During the lens seek operation of S5, S6 checks to see whether or not a track difference is zeroed. When the track difference is zeroed after the beam reaches the target track at time t3, S6 determines that the seek operation has been completed, and stops the lens seek and positioner seek operations. S7 activates the first track servo circuit 20-1 which has been in an OFF status during the seek operation, to start the track servo control and set the erase beam on the target track according to the tracking control.

S8 monitors a seek completion notice from the processor 28-2 (second processor) of the write beam side. Upon receiving the seek completion notice, S9 notifies the higher controller of the seek completion.

Next, the write beam seek operation by the processor 28-2 will be explained.

Firstly, S10 stops the servo control by the second track servo circuit 20-2 to turn OFF the track servo control. Under this state, a beam speed obtained from the tracking error signal TES2 of the write beam is monitored. S11 checks to see whether or not the positioner has been accelerated. When S11 determines that the positioner acceleration has been completed, S12 monitors whether or not the beam speed has been decreased to a lens seek possible level. Meanwhile, the erase beam positioner seek operation on the processor 28-1 side is progressed, and the positioner is decelerated in front of the target track. Then, S12 determines that the beam speed has reached the lens seek possible level. Namely, at time t2' on a second lens actuator current of Fig. 14, it is determined that the lens seek possible speed has been attained.

S13 activates the second lens seek control circuit 22-2 to let the lens actuator 16-2 start a lens seek operation with the write beam. During the lens seek operation, S14 monitors whether or not a track difference relative to the target track obtained according to the number of crossed tracks provided by the track counter 24-2 has been zeroed. When the track difference is zeroed, it is determined that the seek operation has been completed, and the lens seek operation is stopped. S5 notifies the first processor 28-1 of the seek completion, and turns ON the track servo control by the second track servo circuit 20-2, to set the write beam on the target track.

Concerning with the first lens actuator current and second lens actuator current shown in Fig. 14 for explaining the positioner seek operation, deceleration pulses are provided to the tracking coils 68 of the lens actuators 16-1 and 16-2 just in front of the target track, so that the beams may surely be set on the target track.

In connection with a read beam C to be passed through the same object lens 14-2 as for the write beam of the embodiment, position lock control is carried out for maintaining the galvanomirror 50 at a neutral position during the seek operation, so that the beam may be positioned on the same track as the write beam with no special seek operation.

Figures 13B through 13E are flowcharts for supplementing the basic operation flowchart of Fig. 13A.

Figure 13B is a main flowchart for the first processor. As explained above, the first processor receives a seek instruction from the higher controller and transfers it to the second processor (Step S1). In response to the seek instruction, the second processor starts a seek operation in parallel with the first processor. The first processor carries out the seek operation as explained with reference to Fig. 13A (Step S2). Lastly, the first processor determines whether or not the second processor has completed its own seek operation (Step S3), and if completed, notifies the higher controller of the completion. The flow then ends.

Figure 13C is a flowchart showing the seek operation of the first processor. Firstly, a seek difference is set in the track counter (S1). The first processor determines whether or not the second processor has asserted a trigger (S2), and if asserted, starts to accelerate the positioner (S3). The first processor asserts a trigger (S4), and turns OFF the track servo operation (S5). (Refer to Step S2 of Fig. 13A.) The track counter enables a count (S6), and a beam speed is detected (S7). It is determined whether or not a high seek target speed has been attained (S8). If it has been attained, the acceleration is stopped (S9), and a seek operation is carried out to obtain a target track (S10). (Refer to Steps S3 through S6 of Fig. 13A.) The first processor negates the trigger (S11) and turns ON the seek operation. The flow then ends.

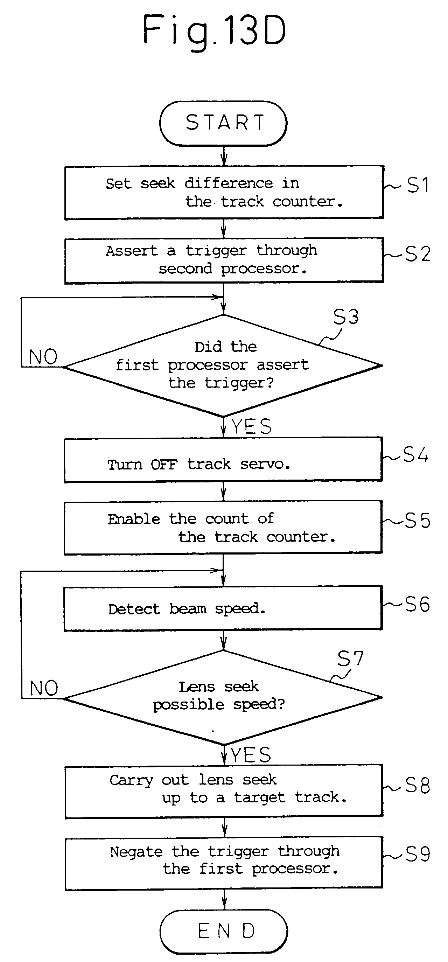

Figure 13D is a flowchart for the seek command to the second processor. Firstly, a seek difference is set in the track counter (S1). The second processor asserts the trigger (S2), determines whether or not the first processor has asserted the trigger (S3), and if asserted, turns OFF the track servo operation. (Refer to Step S10 of Fig. 13A.) The track counter enables a count (S5), and a beam speed is detected (S6). It is determined whether or not a lens seek possible speed has been attained (S7). If the lens seek possible speed has been attained, a lens seek operation is carried out up to the target track (S8). (Refer to Steps S11 through S13 of Fig. 13A.) The second processor negates the trigger (S9) and turns ON the track servo operation. Then, the flow ends.

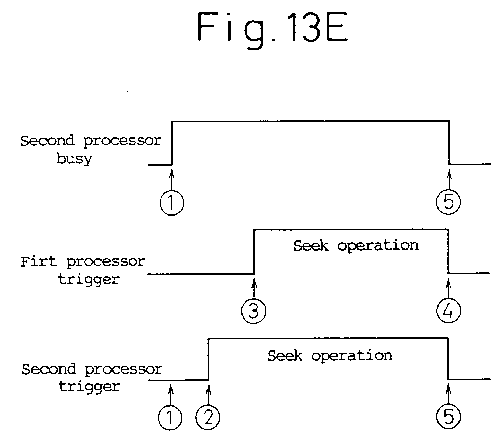

Figure 13E is a timing chart showing control signals between the first and second processors. At timing (1), the first processor issues the seek command to the second processor. This timing corresponds to Step S1 of Fig. 13B. At timing (2), the second processor returns, in response to the seek instruction from the first processor, a seek start wait signal to the first processor, and starts the seek operation (positioner acceleration). This corresponds to Step S2 onward of Fig. 13B. The first and second processors carry out the seek operations, and stop them at timing (4) and (5).

As explained above, the second aspect of the invention directly counts the number of tracks crossed by the second beam (write beam) so that the second beam control system, which does not control the VCM positioner, may correctly seek a target track with the second beam according to a track difference, similar to the first beam control system that carries out a seek operation with the VCM positioner. The invention, therefore, eliminates a corrective seek operation for the second beam and achieves a high-speed track access, similar to a single actuator magneto-optic disk unit.

CAPABILITY OF EXPLOITATION IN INDUSTRY

The invention provides a seek control system of a magneto-optic disk unit having an optical head driven by a VCM positioner, two lens actuators disposed on the optical head, and object lenses disposed on the lens actuators, respectively, for passing first and second beams (erase and write beams) to irradiate an identical track on a medium to record and reproduce data thereto and therefrom. This system shortens an access time needed for accessing a target track through a lens seek operation carried out by driving the two lens actuators. Also, the system prevents a deviation (off-track) of the second beam from the target track during the VCM positioner seek operation carried out according to the first beam, to further shorten the access time. The magneto-optic disk unit with the seek control system, therefore, achieves high-speed erase and write operations.

**Claims**

1. A control system of a magneto-optic disk unit having an optical head (12) moved by a positioner (10) across tracks of a medium (18), first and second lens actuators (16-1, 16-2) mounted on the optical head, and object lenses (14-1, 14-2) disposed on the lens actuators, respectively, for directing first and second beams onto the same track on the medium (18), said control system comprising:

   first track servo means (20-1) for driving the first lens actuator (16-1) according to a tracking error signal (TES1) of the first beam, to carry out tracking control of the first beam; and second track servo means (20-2) for driving the second lens actuator (16-2) according to a tracking error signal (TES2) of the second beam, to carry out tracking control of the second beam;

   characterised in that said control system is a seek control system and further comprises:

first lens seek control means (22-1) for driving the first lens actuator (16-1) to seek a target track with the first beam;

a first processor (28-1) for turning OFF the track servo control by the first track servo means (20-1) and ON the first lens seek control means (22-1) upon receiving a seek instruction from a higher device, to start a seek operation with the lens;

second lens seek control means (22-2) for driving the second lens actuator (16-2) to seek the target track with the second beam; and

a second processor (28-2) for turning OFF the track servo control of the second track servo means (20-2) and turning ON the second lens seek means (22-2) upon receiving the seek instruction of the higher device through the first processor (28-1), to start a seek operation with the lens; wherein:

the second processor (28-2) notifies the first processor (28-1) of the completion of the seek operation with the second beam; and

the first processor (28-1) notifies the higher device of the completion of the seek operation upon receiving the seek completion notice from the second processor (28-1) after the seek operation with the first beam is completed.

2. A seek control system of a magneto-optic disk unit according to claim 1, wherein the first processor (28-1) controls positioner seek control means (26) for driving the positioner (10) according to the first beam, to move the first and second beams to a target track, and the second processor (28-2) does not control the positioner seek control means (26).

3. A seek control system of a magneto-optic disk unit according to claim 1, wherein the first beam is a write beam, and the second beam is an erase beam.

4. A control system of a magneto-optic disk unit having an optical head (12) moved by a positioner (10) across tracks of a medium (18), first and second lens actuators (16-1, 16-2) mounted on the optical head, and object lenses (14-1, 14-2) disposed on the lens actuators, respectively, for directing first and second beams onto the same track on the medium (18), said control system comprising:

first beam position control means (100) comprising first track servo means (20-1) for driving the first lens actuator (16-1) according to a tracking error signal (TES1) of the first beam, to carry out tracking control of the first beam; and

second beam position control means (200) comprising second track servo means (20-2)

for driving the second lens actuator (16-2) according to a tracking error signal (TES2) of the second beam, to carry out tracking control of the second beam; characterised in that:

said control system is a seek control system;

said first beam position control means further comprises:

first lens seek control means (22-1) for driving the first lens actuator (16-1) to seek a target track with the first beam;

first track count means (24-1) for counting the number of tracks crossed by the first beam according to the tracking signal (TES1) of the beam;

positioner seek control means (26) for driving the positioner (10) according to the first beam, to move the first and second beams to a target track; and

first beam control means (28-1) for turning OFF the track servo control by the first track servo means (20-1) and turning ON the positioner seek control means (26) upon receiving a seek instruction from a higher device, to move the first and second beams toward a target track, and when a beam speed decreases below a specified value in front of the target track, turning ON the first lens seek control means (22-1) to carry out a lens seek operation; and

said second beam position control means (200) further comprises:

second lens seek control means (22-2) for driving the second lens actuator (16-2) to seek the target track with the second beam;

second track count means (24-2) for counting the number of tracks crossed by the second beam according to the tracking signal (TES2) of the beam; and

second beam control means (28-2) for turning OFF the track servo control by the second track servo means (20-2), and when the moving speed of the second beam by the positioner (10) decreases below the specified value, turning ON the second lens seek means (22-2) to carry out a lens seek operation; wherein

the second beam control means (28-2) notifies the first beam control means (28-1) of the completion of the seek operation with the second beam, and the first beam control means (28-1) notifies the higher device of the completion of the seek operation upon receiving the seek completion notice from the second beam control means (28-1) after the seek operation with the first beam is completed.

5. A seek control system of a magneto-optic disk unit according to claim 4, wherein, when the speed of the second beam decreases to the specified speed for enabling the lens seek operation after the completion of acceleration for the positioner seek operation, the second beam control means (28-2) turns ON the second lens seek control means (22-2) to seek the track with the second beam.

6. A seek control system of a magneto-optic disk unit according to claim 4, wherein:

when a track difference based on the number of crossed tracks counted by the first track count means (24-1) is zeroed during the lens seek operation, the first beam control means (28-1) terminates the lens seek operation with the first beam as well as the positioner seek operation, and at the same time, turns ON the first track servo means (20-1) to start the tracking control; and

when a track difference based on the number of crossed tracks counted by the second track count means (24-2) is zeroed during the lens seek operation, the second beam control means (28-2) terminates the lens seek operation with the second beam, and at the same time, turns ON the second track servo means (20-2) to start the tracking control.

7. A seek control system of a magneto-optic disk unit according to claim 4, wherein the first beam is an erase beam, and the second beam is a write beam.

**Patentansprüche**

1. Ein Steuerungssystem einer magneto-optischen Platteneinheit, die einen optischen Kopf (12) hat, der durch einen Positionierer (10) quer über Spuren eines Mediums (18) bewegt wird, erste und zweite Linsenbetätiger (16-1, 16-2), die am optischen Kopf montiert sind, und Objektlinsen (14-1, 14-2), die jeweilig an den Linsenbetätigern angeordnet sind, zum Richten von ersten und zweiten Strahlen auf dieselbe Spur auf dem Medium (18), welches Steuerungssystem umfaßt:

ein erstes Spurservomittel (20-1) zum Antreiben des ersten Linsenbetätigers (16-1) gemäß einem Spurverfolgungsfehlersignal (TES1) des ersten Strahls, um die Spurverfolgungssteuerung des ersten Strahls auszuführen; und ein zweites Spurservomittel (20-2) zum Antreiben des zweiten Linsenbetätigers (16-2) gemäß einem Spurverfolgungsfehlersignal (TES2) des zweiten Strahls, um die Spurverfolgungssteuerung des zweiten Strahls auszuführen;

dadurch gekennzeichnet, daß das genannte Steuerungssystem ein Suchsteuerungssystem ist und ferner umfaßt:

ein erstes Linsensuchsteuerungsmittel (22-1) zum Antreiben des ersten Linsenbetätigers (16-1), um eine Zielspur mit dem ersten Strahl zu suchen;

einen ersten Prozessor (28-1) zum AUSschalten der Spurservosteuerung durch das erste Spurservomittel (20-1) und EINschalten des ersten Linsensuchsteuerungsmittels (22-1) bei Empfang einer Suchinstruktion von einer höherwertigen Vorrichtung, um eine Suchoperation mit der Linse zu starten;

ein zweites Linsensuchsteuerungsmittel (22-2) zum Antreiben des zweiten Linsenbetätigers (16-2), um die Zielspur mit dem zweiten Strahl zu suchen; und

einen zweiten Prozessor (28-2) zum AUSschalten der Spurservosteuerung des zweiten Spurservomittels (20-2) und EINschalten des zweiten Linsensuchmittels (22-2) bei Empfang der Suchinstruktion von der höherwertigen Vorrichtung durch den ersten Prozessor (28-1), um eine Suchoperation mit der Linse zu starten; bei dem:

der zweite Prozessor (28-2) dem ersten Prozessor (28-1) die Vollendung der Suchoperation mit dem zweiten Strahl meldet; und

der erste Prozessor (28-1) der höherwertigen Vorrichtung die Vollendung der Suchoperation bei Empfang der Suchvollendungsmeldung von dem zweiten Prozessor (28-2) meldet, nachdem die Suchoperation mit dem ersten Strahl vollendet ist.

2. Ein Suchsteuerungssystem einer magneto-optischen Platteneinheit nach Anspruch 1, bei dem der erste Prozessor (28-1) ein Positionierersuchsteuerungsmittel (26) zum Antreiben des Positionierers (10) gemäß dem ersten Strahl steuert, um die ersten und zweiten Strahlen zu einer Zielspur zu bewegen, und der zweite Prozessor (28-2) das Positionierersuchsteuerungsmittel (26) nicht steuert.

3. Ein Suchsteuerungssystem einer magneto-optischen Platteneinheit nach Anspruch 1, bei dem der erste Strahl ein Schreibstrahl und der zweite Strahl ein Löschstrahl ist.

4. Ein Steuerungssystem einer magneto-optischen Platteneinheit, die einen optischen Kopf (12) hat, der durch einen Positionierer (10) quer über Spuren eines Mediums (18) bewegt wird, erste und zweite Linsenbetätiger (16-1, 16-2), die am optischen Kopf montiert sind, und Objektlinsen (14-1, 14-2), die jeweilig an den Linsenbetätigern angeordnet sind, zum Richten von ersten und zweiten Strahlen auf dieselbe Spur auf dem Medium (18), welches Steuerungssystem umfaßt:

ein erstes Strahlpositionssteuerungsmittel (100) mit einem ersten Spurservomittel (20-1) zum Antreiben des ersten Linsenbetätigers (16-1) gemäß einem Spurverfolgungsfehlersignal (TES1) des ersten Strahls, um die Spurverfolgungssteuerung des ersten Strahls auszuführen; und
ein zweites Strahlpositionssteuerungsmittel (200) mit einem zweiten Spurservomittel (20-2) zum Antreiben des zweiten Linsenbetätigers (16-2) gemäß einem Spurverfolgungsfehlersignal (TES2) des zweiten Strahls, um die Spurverfolgungssteuerung des zweiten Strahls auszuführen; dadurch gekennzeichnet, daß:
das genannte Steuerungssystem ein Suchsteuerungssystem ist;
das genannte erste Strahlpositionssteuerungsmittel ferner umfaßt:

ein erstes Linsensuchsteuerungsmittel (22-1) zum Antreiben des ersten Linsenbetätigers (16-1), um eine Zielspur mit dem ersten Strahl zu suchen;
ein erstes Spurzählmittel (24-1) zum Zählen der Anzahl von Spuren, die durch den ersten Strahl überquert werden, gemäß dem Spurverfolgungssignal (TES1) des Strahls;
ein Positionierersuchsteuerungsmittel (26) zum Antreiben des Positionierers (10) gemäß dem ersten Strahl, um die ersten und zweiten Strahlen zu einer Zielspur zu bewegen; und
ein erstes Strahlsteuerungsmittel (28-1) zum AUSschalten der Spurservosteuerung durch das erste Spurservomittel (20-1) und EINschalten des Positionierersuchsteuerungsmittels (26) bei Empfang einer Suchinstruktion von einer höherwertigen Vorrichtung, um die ersten und zweiten Strahlen hin zu einer Zielspur zu bewegen, und, wenn eine Strahlgeschwindigkeit vor der Zielspur unter einen spezifizierten Wert fällt, zum EINschalten des ersten Linsensuchsteuerungsmittels (22-1), um eine Linsensuchoperation auszuführen; und

das genannte zweite Strahlpositionssteuerungsmittel (200) ferner umfaßt:

ein zweites Linsensuchsteuerungsmittel (22-2) zum Antreiben des zweiten Linsenbetätigers (16-2), um die Zielspur mit dem zweiten Strahl zu suchen;
ein zweites Spurzählmittel (24-2) zum Zählen der Anzahl von Spuren, die durch den zweiten Strahl überquert werden, gemäß dem Spurverfolgungssignal (TES2) des Strahls; und
ein zweites Strahlsteuerungsmittel (28-2) zum AUSschalten der Spurservosteuerung durch das zweite Spurservomittel (20-2) und, wenn die Bewegungsgeschwindigkeit des zweiten Strahls durch den Positionierer (10) unter den spezifizierten Wert fällt, zum EINschalten des zweiten Linsensuchmittels (22-2), um eine Linsensuchoperation auszuführen; bei dem

das zweite Strahlsteuerungsmittel (28-2) dem ersten Strahlsteuerungsmittel (28-1) die Vollendung der Suchoperation mit dem zweiten Strahl meldet, und das erste Strahlsteuerungsmittel (28-1) der höherwertigen Vorrichtung die Vollendung der Suchsteuerung bei Empfang der Suchvollendungsmeldung von dem zweiten Strahlsteuerungsmittel (28-1) meldet, nachdem die Suchoperation mit dem ersten Strahl vollendet ist.

5. Ein Suchsteuerungssystem einer magneto-optischen Platteneinheit nach Anspruch 4, bei dem das zweite Strahlsteuerungsmittel (28-2), wenn die Geschwindigkeit des zweiten Strahls auf die spezifizierte Geschwindigkeit zum Ermöglichen der Linsensuchoperation nach Vollendung der Beschleunigung für die Positionierersuchoperation abfällt, das zweite Linsensuchsteuerungsmittel (22-2) EINschaltet, um die Spur mit dem zweiten Strahl zu suchen.

6. Ein Suchsteuerungssystem einer magneto-optischen Platteneinheit nach Anspruch 4, bei dem:

wenn eine Spurdifferenz auf der Basis der Anzahl von überquerten Spuren, die durch das erste Spurzählmittel (24-1) gezählt wird, während der Linsensuchoperation Null wird, das erste Strahlsteuerungsmittel (28-1) die Linsensuchoperation mit dem ersten Strahl sowie die Positionierersuchoperation beendet und zur gleichen Zeit das erste Spurservomittel (20-1) EINschaltet, um die Spurverfolgungssteuerung zu starten; und
wenn eine Spurdifferenz auf der Basis der Anzahl von überquerten Spuren, die durch das zweite Spurzählmittel (24-2) gezählt wird, während der Linsensuchoperation Null wird, das zweite Strahlsteuerungsmittel (28-2) die Linsensuchoperation mit dem zweiten Strahl beendet und zur gleichen Zeit das zweite Spurservomittel (20-2) EINschaltet, um die Spurverfolgungssteuerung zu starten.

**7.** Ein Suchsteuerungssystem einer magneto-optischen Platteneinheit nach Anspruch 4, bei dem der erste Strahl ein Löschstrahl und der zweite Strahl ein Schreibstrahl ist.

**Revendications**

**1.** Système de commande d'une unité à disque magnéto-optique comportant une tête optique (12) déplacée par un positionneur (10) au travers de pistes d'un support d'information (18), des premier et second actionneurs de lentille (16-1, 16-2) montés sur la tête optique et des lentilles d'objectif (14-1, 14-2) disposées sur les actionneurs de lentille respectivement pour diriger des premier et second faisceaux sur la même piste sur le support d'information (18), ledit système de commande comprenant :

un premier moyen d'asservissement de piste (20-1) pour entraîner le premier actionneur de lentille (16-1) conformément à un signal d'erreur de suivi de piste (TES1) du premier faisceau pour mettre en oeuvre une commande de suivi de piste du premier faisceau ; et
un second moyen d'asservissement de piste (20-2) pour entraîner le second actionneur de lentille (16-2) conformément à un signal d'erreur de suivi de piste (TES2) du second faisceau afin de mettre en oeuvre une commande de suivi de piste du second faisceau,
caractérisé en ce que ledit système de commande est un système de commande de recherche et en ce qu'il comprend en outre :
un premier moyen de commande de recherche de lentille (22-1) pour entraîner le premier actionneur de lentille (16-1) pour rechercher une piste cible avec le premier faisceau ;
un premier processeur (28-1) pour désactiver la commande d'asservissement de piste par le premier moyen d'asservissement de piste (20-1) et pour activer le premier moyen de commande de recherche de lentille (22-1) suite à la réception d'une instruction de recherche provenant d'un dispositif plus élevé, afin de démarrer une opération de recherche avec la lentille ;
un second moyen de commande de recherche de lentille (22-2) pour entraîner le second actionneur de lentille (16-2) pour rechercher la piste cible avec le second faisceau ; et
un second processeur (28-2) pour désactiver la commande d'asservissement de piste du second moyen d'asservissement de piste (20-2) et pour activer le second moyen de recherche de lentille (22-2) suite à la réception de l'instruction de recherche du dispositif plus élevé par l'intermédiaire du premier processeur (28-1), afin de démarrer une opération de recherche avec la lentille,
dans lequel :
le second processeur (28-2) notifie au premier processeur (28-1) la fin de l'opération de recherche avec le second faisceau ; et
le premier processeur (28-1) notifie au dispositif plus élevé la fin de l'opération de recherche suite à la réception de la notification de fin de recherche provenant du second processeur (28-1) après que l'opération de recherche avec le premier faisceau est terminée.

**2.** Système de commande de recherche d'une unité à disque magnéto-optique selon la revendication 1, dans lequel le premier processeur (28-1) commande un moyen de commande de recherche de positionneur (26) pour entraîner le positionneur (10) conformément au premier faisceau, afin de déplacer les premier et second faisceaux jusqu'à une piste cible, et le second processeur (28-2) ne commande pas le moyen de commande de recherche de positionneur (26).

**3.** Système de commande de recherche d'une unité à disque magnéto-optique selon la revendication 1, dans lequel le premier faisceau est un faisceau d'écriture et le second faisceau est un faisceau d'effacement.

**4.** Système de commande d'une unité à disque magnéto-optique comportant une tête optique (12) déplacée par un positionneur (10) au travers de pistes d'un support d'information (18), des premier et second actionneurs de lentille (16-1, 16-2) montés sur la tête optique et des lentilles d'objectif (14-1, 14-2) disposées sur les actionneurs de lentille respectivement pour diriger des premier et second faisceaux sur la même piste sur le support d'information (18), ledit système de commande comprenant :

un premier moyen de commande de position de faisceau (100) comprenant un premier moyen d'asservissement de piste (20-1) pour entraîner le premier actionneur de lentille (16-1) conformément à un signal d'erreur de suivi de piste (TES1) du premier faisceau afin de mettre en oeuvre une commande de suivi de piste du premier faisceau ; et
un second moyen de commande de position de faisceau (200) comprenant un second moyen d'asservissement de piste (20-2) pour entraîner le second actionneur de lentille (16-2) conformément à un signal d'erreur de suivi de piste (TES2) du second faisceau, afin de mettre en oeuvre une commande de suivi de piste du second faisceau,

caractérisé en ce que :

ledit système de commande est un système de commande de recherche ;

ledit premier moyen de commande de position de faisceau comprend en outre :

un premier moyen de commande de recherche de lentille (22-1) pour entraîner le premier actionneur de lentille (16-1) pour rechercher une piste cible avec le premier faisceau ;

un premier moyen de comptage de pistes (24-1) pour compter le nombre de pistes croisées par le premier faisceau conformément au signal de suivi de piste (TES1) du faisceau ;

un moyen de commande de recherche de positionneur (26) pour entraîner le positionneur (10) conformément au premier faisceau afin de déplacer les premier et second faisceaux jusqu'à une piste cible ; et

un premier moyen de commande de faisceau (28-1) pour désactiver la commande d'asservissement de piste par le premier moyen d'asservissement de piste (20-1) et pour activer le moyen de commande de recherche de positionneur (26) suite à la réception d'une instruction de recherche provenant d'un dispositif plus élevé afin de déplacer les premier et second faisceaux en direction d'une piste cible et lorsqu'une vitesse de faisceau décroît au-dessous d'une valeur spécifiée à l'avant de la piste cible, pour activer le premier moyen de commande de recherche de lentille (22-1) pour mettre en oeuvre une opération de recherche de lentille ; et

ledit second moyen de commande de position de faisceau (200) comprend en outre :

un second moyen de commande de recherche de lentille (22-2) pour entraîner le second actionneur de lentille (16-2) pour rechercher la piste cible avec le second faisceau ;

un second moyen de comptage de pistes (24-2) pour compter le nombre de pistes croisées par le second faisceau conformément au signal de suivi de piste (TES2) du faisceau ; et

un second moyen de commande de faisceau (28-2) pour désactiver la commande d'asservissement de piste par le second moyen d'asservissement de piste (20-2) et lorsque la vitesse de déplacement du second faisceau par le positionneur (10) décroît au-dessous de la valeur spécifiée, pour activer le second moyen de recherche de lentille (22-2) pour mettre en oeuvre une opération de recherche de lentille, dans lequel :

le second moyen de commande de faisceau (28-2) notifie au premier moyen de commande de faisceau (28-1) la fin de l'opération de recherche avec le second faisceau et le premier moyen de commande de faisceau (28-1) notifie au dispositif plus élevé la fin de l'opération de recherche suite à la réception de la notification de fin de recherche provenant du second moyen de commande de faisceau (28-1) après que l'opération de recherche avec le premier faisceau est terminée.

5. Système de commande de recherche d'une unité à disque magnéto-optique selon la revendication 4, dans lequel, lorsque la vitesse du second faisceau décroît jusqu'à la vitesse spécifiée pour permettre l'opération de recherche de lentille après la fin de l'accélération pour l'opération de recherche de positionneur, le second moyen de commande de faisceau (28-2) active le second moyen de commande de recherche de lentille (22-2) pour rechercher la piste avec le second faisceau.

6. Système de commande de recherche d'une unité à disque magnéto-optique selon la revendication 4, dans lequel :

lorsqu'une différence de piste basée sur le nombre de pistes croisées comptées par le premier moyen de comptage de pistes (24-1) est mise à zéro pendant l'opération de recherche de lentille, le premier moyen de commande de faisceau (28-1) termine l'opération de recherche de lentille avec le premier faisceau ainsi que l'opération de recherche de positionneur et dans le même temps, active le premier moyen d'asservissement de piste (20-1) pour démarrer la commande de suivi de piste ; et

lorsqu'une différence de piste basée sur le nombre de pistes croisées comptées par le second moyen de comptage de pistes (24-2) est mise à zéro pendant l'opération de recherche de lentille, le second moyen de commande de faisceau (28-2) termine l'opération de recherche de lentille avec le second faisceau et dans le même temps, active le second moyen d'asservissement de piste (20-2) pour démarrer la commande de suivi de piste.

7. Système de commande de recherche d'une unité à disque magnéto-optique selon la revendication 4, dans lequel le premier faisceau est un faisceau d'effacement et le second faisceau est un faisceau d'écriture.

Fig. 1

EP 0 503 095 B1

# Fig.2

# Fig. 4

14-1

70

72

68

16-1

74

66

64

62

Fig. 5

200

16-2

40  68  14-2  14-1  68  36

TES2

Second track servo circuit  20-2

Second lens seek control circuit  22-2

Second processor (MPU)  28-2

VCM positioner  10

300

16-1

TES1

First track servo circuit  20-1

First lens seek control circuit  22-1

Positioner seek control circuit  26

First processor (MPU)  28-1

100

To higher controller

21

# Fig. 6

```
                          ┌─────────┐
                          │  START  │
                          └─────────┘
                               │
                               ▼
              NO           ╱───────────╲
         ◄────────────────╱    Any      ╲─── S1
         │               ╱ seek instruction from╲
         │               ╲ a higher controller? ╱
         │                ╲───────────╱
         │                     │ YES
         │          ┌──────────┴──────────┐
         │          ▼                     ▼
         │   ╭──────────────╮      ╭───────────────╮
         │   │First processor│      │Second processor│
         │   ╰──────────────╯      ╰───────────────╯
         │          │                     │
         │          ▼                     ▼
         │   ┌──────────────┐ S2   ┌──────────────┐ S8
         │   │Turn OFF track│      │Turn OFF track│
         │   │servo.        │      │servo.        │
         │   └──────────────┘      └──────────────┘
         │          │                     │
         │   ┌──────┘                     └──────┐
         │   ▼                                   ▼
         │ ┌────────────────┐ S3   ┌────────────────┐ S9
         │ │Carry out lens  │      │Carry out lens  │
         │ │seek operation  │      │seek operation  │
         │ │with a first    │      │with a second   │
         │ │beam.           │      │beam.           │
         │ └────────────────┘      └────────────────┘
         │        │                        │
         │   NO   ▼                    NO   ▼
         └───◄───╱─────────╲ S4    ◄───────╱─────────╲ S10
                ╲Track      ╱              ╲Track      ╱
                ╲difference╱               ╲difference╱
                ╲ = 0 ?   ╱               ╲ = 0 ?    ╱
                 ╲───────╱                 ╲───────╱
                     │ YES                     │ YES
                     ▼                         ▼
            ┌──────────────┐ S5      ┌──────────────────┐ S11
            │Turn ON track │         │Send completion   │
            │servo.        │         │notice to the     │
            └──────────────┘         │first processor   │
                  │                  │and trun ON track │
            ┌─────┘                  │servo.            │
            ▼                        └──────────────────┘
     No   ╱──────────╲ S6                    │
    ◄────╱Completion  ╲                      ▼
    │   ╱notice from the╲              ┌─────────┐
    │   ╲second          ╱             │  END    │
    │   ╲processor?     ╱              └─────────┘
    │    ╲──────────╱
    │         │
    │         ▼
    │  ┌──────────────┐ S7
    │  │Send completion│
    │  │notice to the │
    │  │higher        │
    │  │controller    │
    │  └──────────────┘
    │         │
    │         ▼
    │   ┌─────────┐
    │   │  END    │
    │   └─────────┘
```

22

# Fig. 7

t1    Lens seek by first processor    t2

TES1

t1'    Lens seek by second processor    t2'

TES2

# Fig.8

# Fig. 9

16-1  36  68  14-1  14-2  68  40  16-2

TES1

TES2

100

VCM positioner

10

TES1

200

20-1

First track
servo circuit

Second track
servo circuit

20-2

Processor
(M P U)

28

22-1

First lens seek
control circuit

Second lens seek
control circuit

22-2

26

Positioner seek
control circuit

TES2

EP 0 503 095 B1

# Fig.10

Lens seek with
first beam

TES1

Lens seek with
second beam

TES2

# Fig.11

To higher device

100

24-1 First track count means

28-1 First beam control means

20-1 First track servo means

22-1 First lens seek control means

26 Positioner seek control means

TES1

12

16-1

16-2

14-1

14-2

10 Positioner

TES2

200

24-2 Second track count means

28-2 Second beam control means

20-2 Second track servo means

22-2 Second lens seek control means

18

# Fig.12

EP 0 503 095 B1

EP 0 503 095 B1

# Fig. 13A

```
                    ( START )
                         |
          NO    ┌────────┴────────┐        S1
          ┌─────◇ Any seek        ◇
          │     ◇ instruction from a higher ◇
          │     ◇ controller?     ◇
          │     └────────┬────────┘
          │            YES
          │    ┌──────────┴──────────────────────┐
          │ ( First processor )        ( Second processor )
          │          |                          |
          │ ┌────────┴────────┐ S2      ┌────────┴────────┐ S10
          │ │ Turn OFF track servo. │    │ Turn OFF track servo. │
          │ └────────┬────────┘        └────────┬────────┘
          │ ┌────────┴────────────┐ S3         NO  ┌──────┴──────┐ S11
          │ │ Carry out positioner seek operation │  ┌──◇ Positioner  ◇
          │ │ (Acceleration) – (Constant          │  │  ◇ acceleration ◇
          │ │ speed) – (Decelaration)             │  │  ◇ completed?   ◇
          │ └────────┬────────────┘               │  └──────┬──────┘
          │   NO  ┌──┴──┐ S4                       │       YES
          │   ┌───◇ Lens ◇                    NO  ┌──┴──┐ S12
          │   │   ◇ seek possible speed? ◇      ┌──◇ Lens ◇
          │   │   └──┬──┘                       │  ◇ seek possible ◇
          │   │    YES                          │  ◇ speed? ◇
          │   │ ┌────┴────┐ S5                   │  └──┬──┘
          │   │ │ Carry out lens seek. │         │   YES
          │   │ └────┬────┘                      │ ┌──┴──┐ S13
          │   │   NO ┌┴┐ S6                      │ │ Carry out lens seek. │
          │   │   ┌──◇ Track difference =0 ? ◇   │ └──┬──┘
          │   │   │  └┬┘                      NO ┌────┴────┐ S14
          │   │    YES                        ┌──◇ Track difference =0 ? ◇
          │   │ ┌──┴──┐ S7                    │  └────┬────┘
          │   │ │ Turn On track servo. │      │     YES
          │   │ └──┬──┘                       │ ┌────┴──────────┐ S15
          │   │   ┌┴┐ S8                       │ │ Send seek completion │
          │   │   ◇ Completion notice from the second processor? ◇ │ │ notice to the first │
          │   │   └┬┘                          │ │ processor and turn │
          │   │ ┌──┴──┐ S9                      │ │ ON track servo. │
          │   │ │ Send completion notice to the higher controller │ │ └──┬──┘
          │   │ └──┬──┘                         │  ( E N D )
          │      ( E N D )
```

Turn OFF track servo. ~S2

Carry out positioner seek operation (Acceleration) – (Constant speed) – (Decelaration) S3

Lens seek possible speed? S4

Carry out lens seek. S5

Track difference =0 ? S6

Turn On track servo. S7

Completion notice from the second processor? S8

Send completion notice to the higher controller S9

Turn OFF track servo. S10

Positioner acceleration completed? S11

Lens seek possible speed? S12

Carry out lens seek. S13

Track difference =0 ? S14

Send seek completion notice to the first processor and turn ON track servo. S15

# Fig.13B

START

Issue a seek command to the second processor ~S1

Execute seek operation through the first processor ~S2

Did the second processor complete seek operation? ~S3

NO

YES

END

# Fig.13c

```
            ( START )
                |
                v
    +---------------------------+
    |    Set seek difference    |~ S1
    |     in a track counter.   |
    +---------------------------+
                |
                v
  NO    /  Did the          \    S2
<------<  second processor assert >
        \    trigger        /
         \      ?          /
                | YES
                v
    +---------------------------+
    |    Start the acceleration |~ S3
    |       of a positioner.    |
    +---------------------------+
                |
                v
    +---------------------------+
    |  Assert the trigger through|~ S4
    |     the first processor.  |
    +---------------------------+
                |
                v
    +---------------------------+
    |   Turn OFF track servo.   |~ S5
    +---------------------------+
                |
                v
    +---------------------------+
    |     Enable the count of   |~ S6
    |     the track counter.    |
    +---------------------------+
                |
                v
    +---------------------------+
    |    Detect beam speed.     |~ S7
    +---------------------------+
                |
                v
  NO    /                   \    S8
<------<     Target speed     >
        \        ?           /
                | YES
                v
    +---------------------------+
    |   Stop the acceleration.  |~ S9
    +---------------------------+
                |
                v
    +---------------------------+
    |    Carry out seek control |~ S10
    |      up to a target track.|
    +---------------------------+
                |
                v
    +---------------------------+
    | Negate the trigger through|~ S11
    |     the first processor.  |
    +---------------------------+
                |
                v
            ( END )
```

31

# Fig.13D

START

Set seek difference in
the track counter. — S1

Assert a trigger through
second processor. — S2

Did the
first processor assert
the trigger? — S3
NO
YES

Turn OFF track servo. — S4

Enable the count of
the track counter. — S5

Detect beam speed. — S6

Lens seek
possible speed? — S7
NO
YES

Carry out lens seek
up to a target track. — S8

Negate the trigger through
the first processor. — S9

END

# Fig.13E

Second processor
busy

①

⑤

Firt processor
trigger

Seek operation

③

④

Second processor
trigger

Seek operation

① ②

⑤

# Fig.14

Track servo

TES1 of
first beam
(erase beam)

VCM positioner
, current

Positioner seek period

Lens seek period

First lens
actuator current

Track counter only

Lens seek period

Second lens
actuator current

TES2 of
second beam
(write beam)

ON    OFF    ON

t₁    t₂    t₃

t₂    t₂'

EP 0 503 095 B1

34

# Fig.15

EP 0 503 095 B1

To higher device

# Fig.16

## List of reference marks

10:  positioner (VCM positioner)

12:  optical head

12-1:  fixed optical system

12-2:  movable optical system

14-1, 14-2:  object lenses

16-1, 16-2:  lens actuators

18:  medium (magneto-optic disk)

20-1:  first track servo means (circuit)

20-2:  second track servo means (circuit)

22-1:  first lens seek control means (circuit)

22-2:  second lens seek control means (circuit)

24-1:  first track count means (first track counter)

24-2:  second track count means (second track counter)

26:  positioner seek control means (circuit)

28-1:  first processor (first beam control means)

28-2:  second processor (second beam control means)

A:  first beam (write beam or erase beam)

B:  second beam (erase beam or write beam)

100:  write beam position control portion (erase beam position control portion)

200:  erase beam position control portion (write beam position control portion)

30:  carriage

32, 34, 48:  semiconductor lasers

36, 40, 54: tracking error detectors

38, 42: focus error detecting photosensors

50: galvanomirror

52: galvanomirror position detector

56: RF2 detecting photosensor

62: base

64: magnetic circuit

66: slide shaft

68: tracking coil

70: rotary arm

72: weight

74: focus coil

92, 105, 108, 118: collimator lenses (CLs)

93: prism

94: beam splitter

96: dichroic mirror (DM)

98, 110, 115, 120: polarization beam splitters (PBSs)

104: semiconductor laser

112, 122: $\lambda/4$ plates

114: color correction prism (CCP)

116, 124: Foucault optical units